# EUROPEAN PATENT SPECIFICATION

(11) **EP 2 551 154 B1**
(45) Date of publication and mention of the grant of the patent: **22.04.2020**
(21) Application number: 12005358.2
(22) Date of filing: 23.07.2012
(51) Int. Cl.: B60Q 1/08, B60Q 1/12, G02B 19/00, F21S 41/14, F21S 41/147, F21S 41/255, F21S 41/32, F21S 41/36, F21S 41/16, F21Y 113/00, F21S 41/675, F21Y 115/30, F21S 41/176, F21S 45/70, F21W 102/19, F21W 102/17

(54) **Illumination device and vehicle headlamp including the illumination device**
Beleuchtungsvorrichtung und Fahrzeugscheinwerfer mit der Beleuchtungsvorrichtung
Dispositif d'éclairage et phare de véhicule comprenant le dispositif d'éclairage

(30) Priority: 25.07.2011 JP 2011162605; 06.07.2012 JP 2012153104
(43) Date of publication of application: 30.01.2013
(73) Proprietor: Sharp Kabushiki Kaisha, Osaka-shi, Osaka 545-8522 (JP)
(72) Inventor: Takahashi, Koji, Osaka-shi Osaka 545-8522 (JP); Ito, Shigetoshi, Osaka-shi Osaka 545-8522 (JP); Takahira, Yoshiyuki, Osaka-shi Osaka 545-8522 (JP)
(74) Representative: Müller Hoffmann & Partner

(56) References cited:
- EP-A2- 2 063 170
- DE-A1-102005 014 754
- JP-A- 2010 036 835
- JP-A- 2010 232 044
- US-A1- 2009 046 474
- US-A1- 2009 086 500

## Description

### Technical Field

The present invention relates to an illumination device including a laser light source, and, more specifically, to a hybrid illumination device including (i) a laser light source and (ii) a conventional light source such as an LED.

### Background Art

Conventionally, halogen lamps have been popular for headlamps of automobile etc. (vehicle headlamps). In recent years, however, there have been an increasing number of headlamps using HID lamps (High-Intensity Discharge lamps).

Automobile headlamps, in terms of passing beam headlamps for instance, are configured to be capable of forming light distribution patterns, which have cut-off lines at top ends thereof. This secures front visibility of a driver of a vehicle having the automobile headlamps, while not disturbing vision of a driver of an oncoming vehicle.

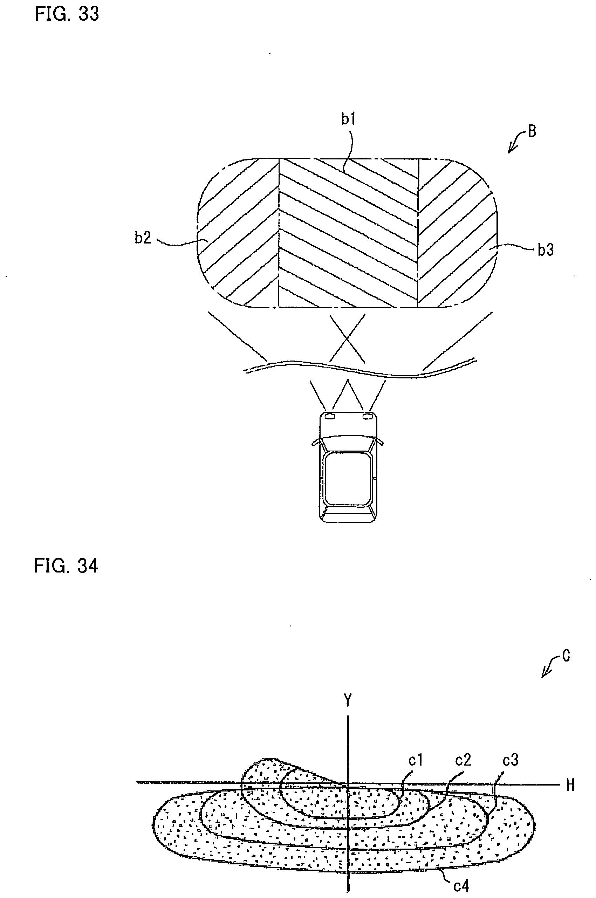

Lately, there has been a considerable rise in the development of a headlamp that employs, as a light source, an LED (Light-Emitting Diode) consuming little electric power. Patent Literature 1 discloses, for example, a headlamp (hereinafter referred to as a headlamp of a region-dividing type) that forms a desired light distribution pattern B by combining light distribution patterns b1 through b3 together, which are distributed to respective regions (see Fig. 33).

Additionally, Patent Literature 2 discloses a headlamp (hereinafter referred to as a headlamp of a stacking type) that forms a desired light distribution pattern C by superposing light distribution patterns c1 through c4 formed by respective light source units (see Fig. 34).

JP 2010-232044 A discloses a vehicle lamp comprising a LED light source which forms a light distribution pattern for a low beam and a fluorescent phosphor substance which radiates light to near a cut-off part of the light distribution pattern by receiving light from a laser light source.

Further technological background can be found in JP 2010-036835 A.

### Citation List

### Patent Literatures

Patent Literature 1
   Japanese Patent Application Publication, Tokukai, No. 2007-030570 A (Publication Date: February 8, 2007)
Patent Literature 2
   Japanese Patent Application Publication, Tokukai, No. 2008-013014 A (Publication Date: January 24, 2008)

### Summary of Invention

### Technical Problem

In order to use a reflector to converge, on a small spot, light emitted from a light source, it is preferable that (i) the luminance of the light source is high and (ii) the light source has a size sufficiently small in relation to that of the reflector.

However, the headlamps disclosed in Patent Literatures 1 and 2 can not (i) produce light having sufficiently high luminance and (ii) reduce the size of a light source in relation to that of a reflector. Therefore, with the headlamps disclosed in Patent Literatures 1 and 2, it is difficult to distribute light of a light source to a smaller spot, with the use of a reflector.

In contrast to such headlamps, there are arrangements in which a fluorescent material, which has been excited by a laserbeam, is used as a light source (hereinafter referred to as a laser light source). This makes it possible to (i) produce luminance superior to that produced by a conventional light source such as an LED and (ii) distribute light to a further distance without diffusing the light even if a small optical system is used. Such is made possible by using a fluorescent material, which has been excited by a laser beam, as a light source (hereinafter referred to as a laser light source).

Therefore, by using a laser light source for a headlamp, it is possible to illuminate a small spot located further. Such a light distribution characteristic can be suitably used for, for example, formation of a light distribution pattern for high beams (driving beams).

Meanwhile, a laser light source, which is capable of producing an excellent light distribution characteristic, does not necessarily need to be used alone to illuminate a large area. It is in fact preferable to take advantage of both (i) the characteristics of a laser light source and (ii) the characteristics of a conventional light source such as an LED. However, such a technical idea has never been disclosed so far.

The present invention has been made in view of the foregoing problem, and it is an object of the present invention to provide an illumination device using, in combination, characteristics of a laser light source and of other light sources.

### Solution to Problem

In order to achieve the object, the present invention provides an illumination device according to claim 1 and a vehicle headlamp comprising such an illumination device. As an alternative to solve the same problem, the present invention provides an illumination device according to claim 2 and a vehicle headlamp comprising such an illumination device. Further aspects of the present invention are provided according to the dependent claims.

In order to attain the object, an illumination device in accordance with the present invention is defined in claim 1 and includes: a first light emitting section for emitting light upon reception of a laser beam; a second light emitting section for emitting light by use of a principle of light emission differing from one used by the first light emitting section; and at least one light distributing section for (i) distributing, to a first light-distributed region, the light emitted from the first light emitting section and (ii) distributing, to a second light-distributed region, the light emitted from the second light emitting section.

According to the configuration, the first light emitting section emits light upon reception of a laser beam; the second light emitting section emits light, according to a principle of light emission differing from that employed by the first light emitting section; and the light distributing section redirects light beams, which have been emitted from the first light emitting section and the second light emitting section respectively, to the first light-distributed region and the second light-distributed region, respectively.

The first light emitting section employs the principle of light emission by which the first light emitting section emits light upon reception of a laser beam. This allows (i) the first light emitting section to emit light having higher luminance than light produced by the conventional light sources and (ii) the first light emitting section itself to be downsized. Therefore, it is possible, with use of the light distributing section, to distribute light, which has been emitted from the first light emitting section, (a) to a small region located further and (b) without diffusing the light.

Besides such a first light emitting section of the illumination device, the illumination device also includes the second light emitting section that, in order to emit light, employs the principle of light emission differing from that employed by the first light emitting section. The light distributing section redirects light beams, which have been emitted from the first light emitting section and the second light emitting section respectively, to the first light-distributed region and the second light-distributed region, respectively.

Thus, with the configuration, it is possible to individually distribute light beams of the first light emitting section and the second light emitting section with the use of the light distributing section. Therefore, it is possible to arrange, as needed, the first light-distributed region and the second light-distributed region, independently of each other.

Therefore, with the configuration, it is possible to control the luminous intensity, such as (i) distributing light of the second light emitting section to a large area (the second light-distributed region) and (ii) distributing light of the first light emitting section to a region (the first light-distributed region) specifically intended to be illuminated more brightly than the other.

Thus, with the configuration, it is possible to individually distribute, with the use of the light distributing section, light beams that have been emitted from the first light emitting section and the second light emitting section respectively. This allows for efficient illumination taking advantage of the respective characteristics of the first light emitting section and the second light emitting section.

Hence, with the present invention, it is possible to achieve an illumination device using, in combination, respective characteristics of a laser light source and other light sources.

### Advantageous Effects of Invention

An illumination device in accordance with the present invention includes a first light emitting section that emits light upon reception of a laser beam; a second light emitting section that emits light by use of a principle of light emission differing from one used by the first light emitting section; and at least one light distributing section that (i) distributes, to a first light-distributed region, light emitted from the first light emitting section and (ii) distributes, to a second light-distributed region, light emitted from the second light emitting section.

Therefore, the present invention produces an effect of realizing an illumination device using characteristics of a laser light source and other light sources in combination.

### Brief Description of Drawings

Fig. 1

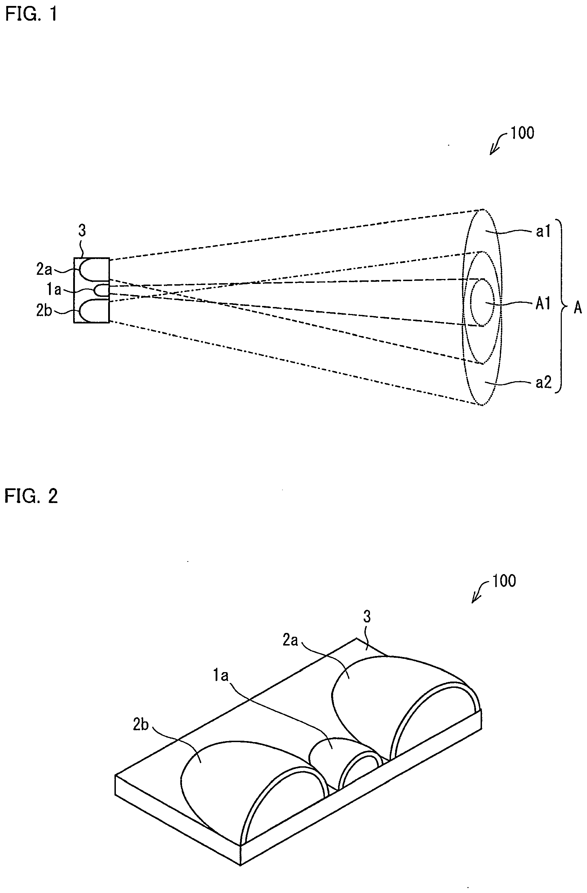

   Fig. 1 is a plan view schematically illustrating a configuration of a headlamp system in accordance with Embodiment 1.
Fig. 2
   Fig. 2 is a perspective view illustrating the headlamp system illustrated in Fig. 1.
Fig. 3

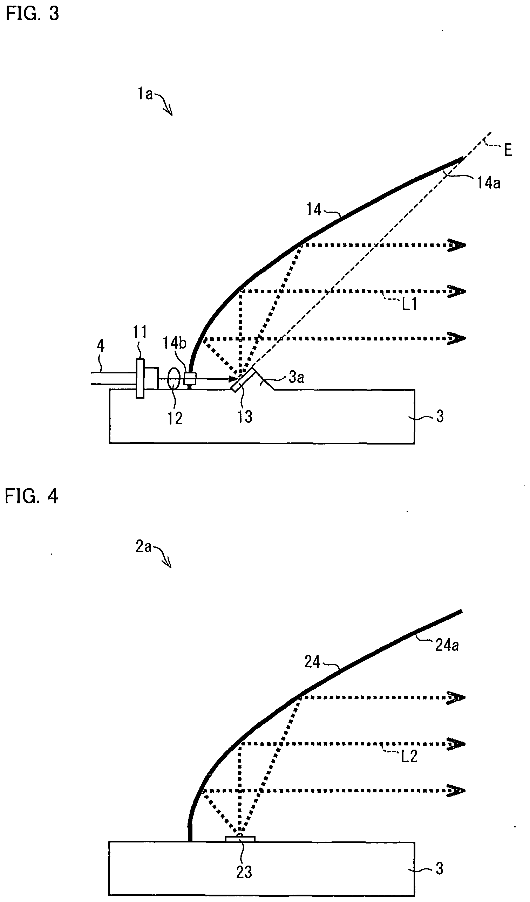

   Fig. 3 is a cross-sectional view schematically illustrating a configuration of a laser light source unit included in the headlamp system illustrated in Fig. 1.
Fig. 4
   Fig. 4 is a cross-sectional view schematically illustrating a configuration of an LED light source unit included in the headlamp system illustrated in Fig. 1.
Fig. 5

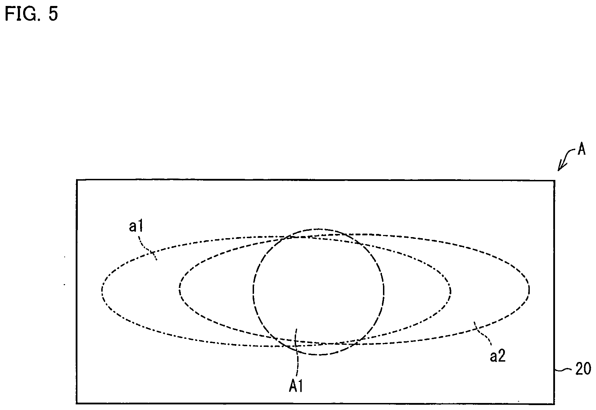

   Fig. 5 is a view schematically illustrating a light distribution pattern which is produced by the headlamp system illustrated in Fig. 1 and is projected on a reference surface.
Fig. 6(a)

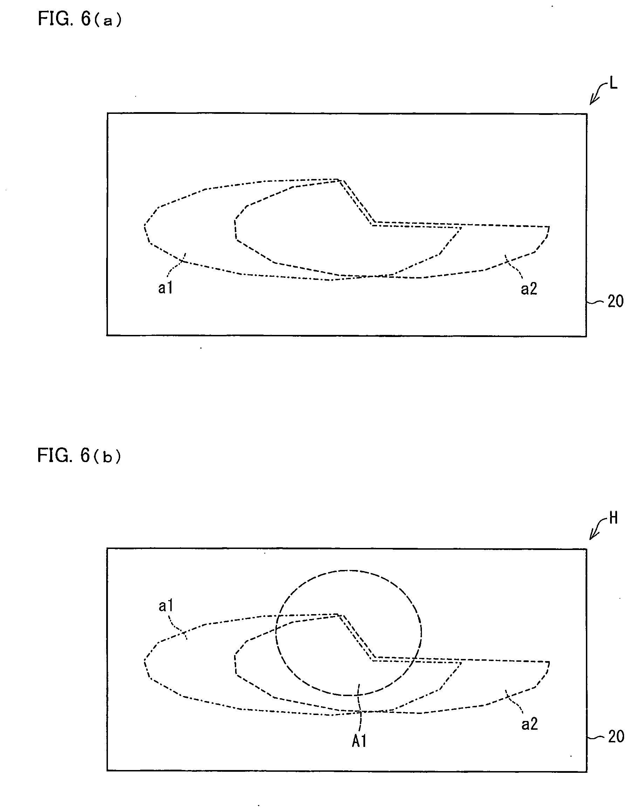

   Figs. 6(a) is a view (i) schematically illustrating a modification of the light distribution pattern projected on the reference surface and (ii) illustrating a light distribution pattern fulfilling the standards of light distribution characteristics of a passing beam headlamp.
Fig. 6(b)
   Fig. 6(b) is a view (i) schematically illustrating a modification of the light distribution pattern projected on the reference surface and (ii) illustrating a light distribution pattern fulfilling the standards of light distribution characteristics of a driving beam headlamp.
Fig. 7

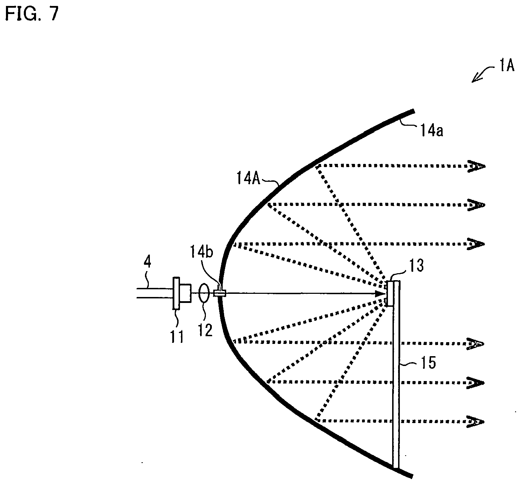

   Fig. 7 is a cross-sectional view schematically illustrating a modification of the laser light source unit illustrated in Fig. 3.
Fig. 8

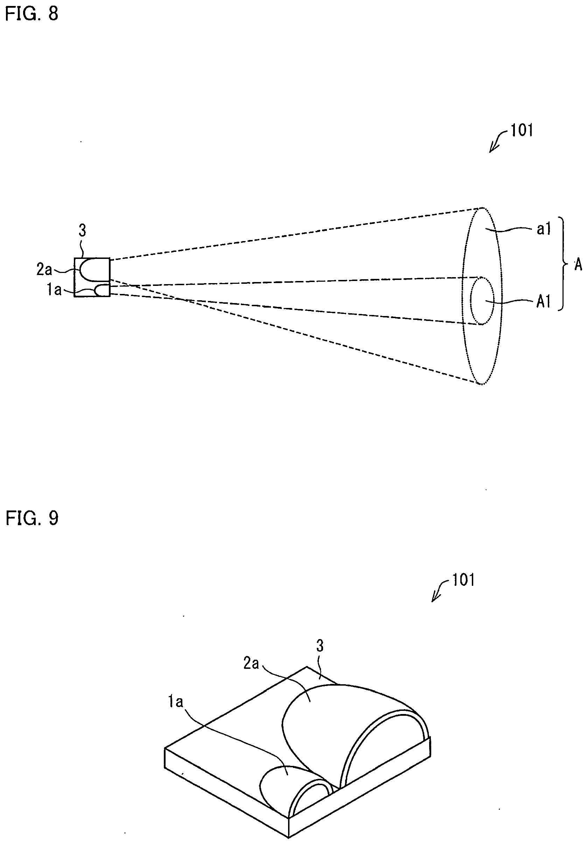

   Fig. 8 is a plan view schematically illustrating a headlamp system in accordance with Embodiment 2.
Fig. 9
   Fig. 9 is a perspective view illustrating the headlamp system illustrated in Fig. 8.
Fig. 10

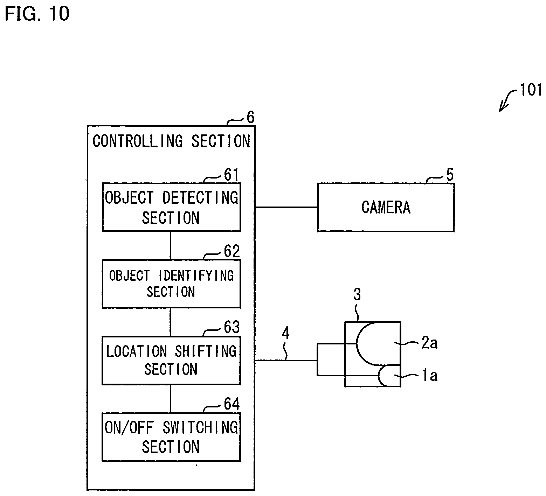

   Fig. 10 is a block diagram illustrating an inner configuration of the headlamp system in accordance with Embodiment 2.
Fig. 11

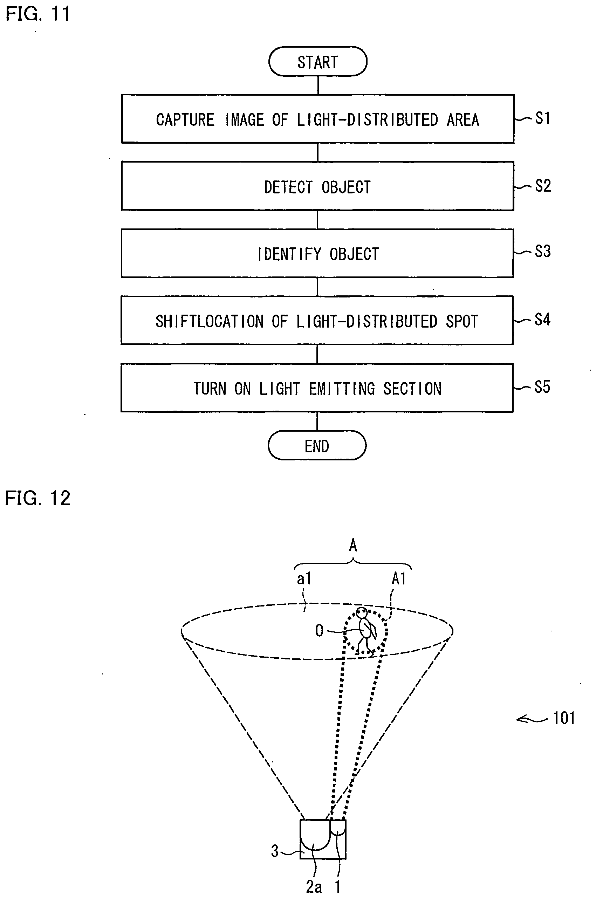

   Fig. 11 is a flow chart illustrating the flow of the operation of the headlamp system illustrated in Fig. 10.
Fig. 12
   Fig. 12 is a view schematically illustrating the headlamp system in motion, which headlamp system is illustrated in Fig. 10.
Fig. 13

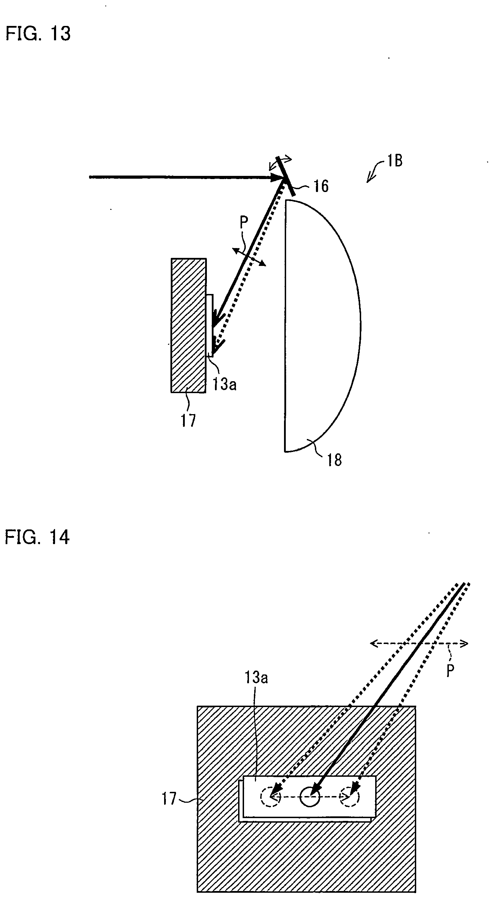

   Fig. 13 is a cross-sectional view illustrating a configuration of main components in a modification of the laser light source unit illustrated in Fig. 8.
Fig. 14
   Fig. 14 is a close-up plan view illustrating an area around a light emitting section illustrated in Fig. 13.
Fig. 15(a)

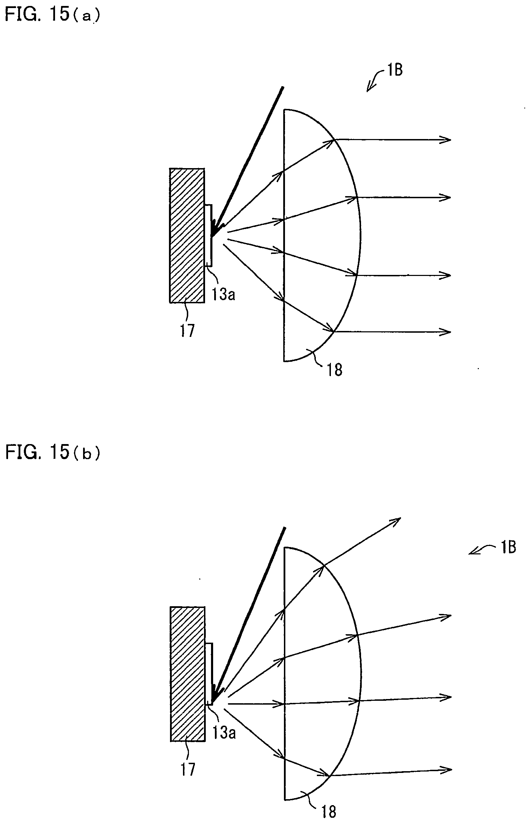

   Figs. 15(a) is a cross-sectional view illustrating (i) a distributing direction of light emitted from the laser light source unit illustrated in Fig. 13 and (ii) a distributing direction of light in a case where a central part of the light emitting section is irradiated with a laser beam.
Fig. 15(b)
   Fig. 15(b) is a cross-sectional view illustrating (i) a distributing direction of light emitted from the laser light source unit illustrated in Fig. 13 and (ii) a distributing direction of light in a case where an irradiated region, which is irradiated with a laser beam, is shifted.
Fig. 16

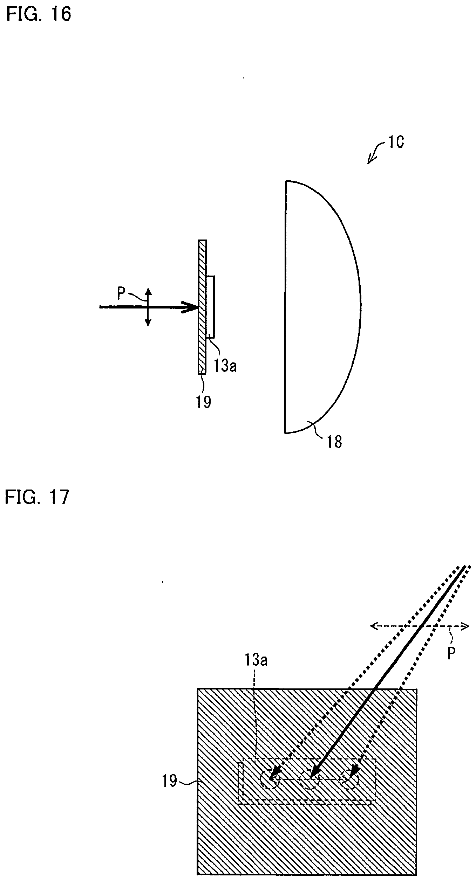

   Fig. 16 is a cross-sectional view illustrating a configuration of main components of a laser light source unit 1C including a transmissive-type light emitting section.
Fig. 17
   Fig. 17 is a close-up plan view illustrating an area around the light emitting section illustrated in Fig. 16.
Fig. 18

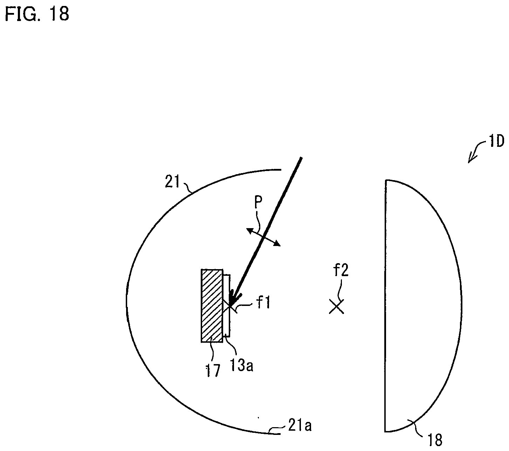

   Fig. 18 is a cross-sectional view illustrating a configuration of main components of a laser light source unit including a converging lens and a reflector.
Fig. 19

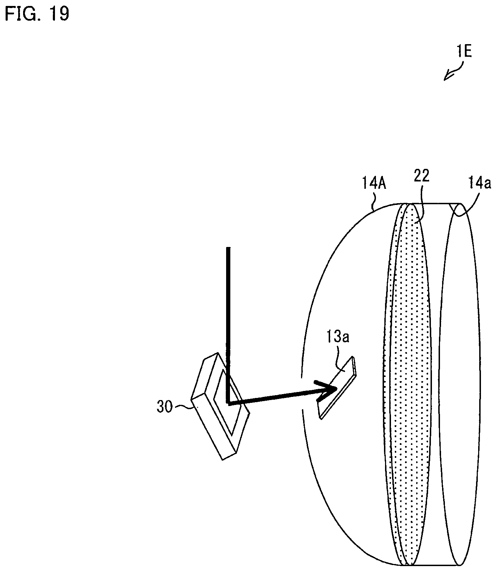

   Fig. 19 is a perspective view illustrating a configuration of main components of a laser light source unit including an MEMS mirror element.
Fig. 20

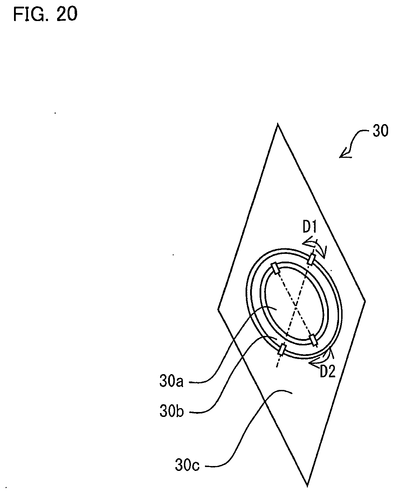

   Fig. 20 is a perspective view illustrating the MEMS mirror element illustrated in Fig. 19.
Fig. 21

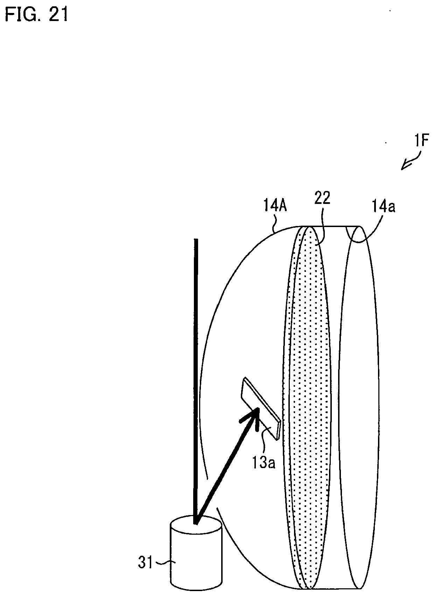

   Fig. 21 is a perspective view illustrating a configuration of main components of a laser light source unit including a two-axis piezo mirror element.
Fig. 22

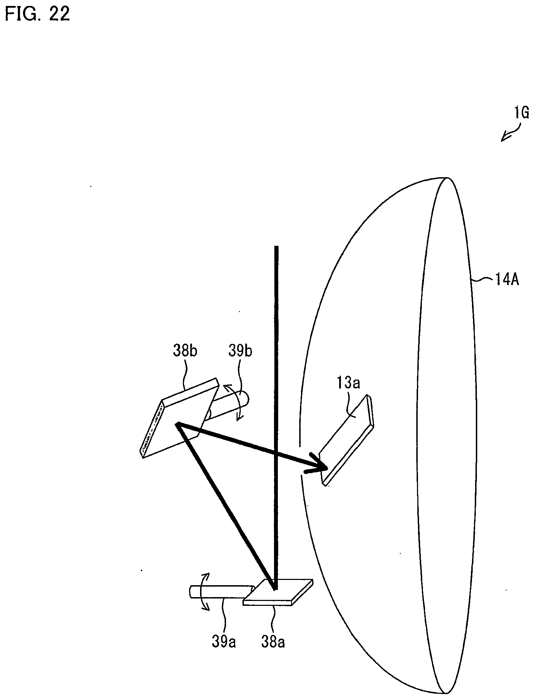

   Fig. 22 is a perspective view illustrating a configuration of main components of a laser light source unit including two galvano mirrors.
Fig. 23

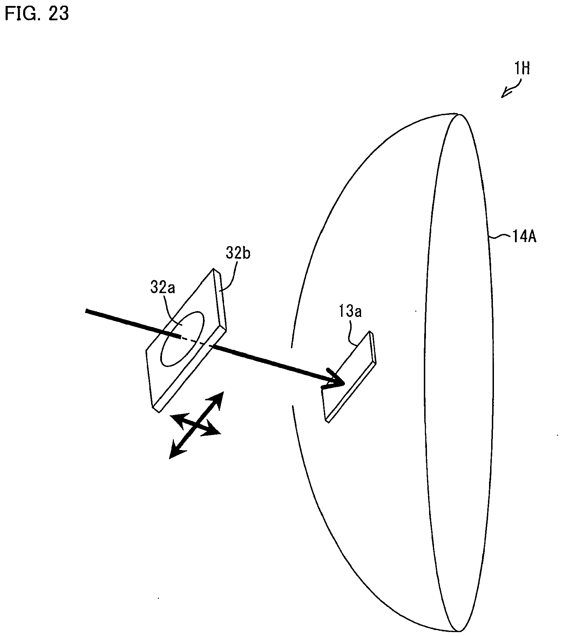

   Fig. 23 is a perspective view illustrating a configuration of main components of a laser light source unit including an adjustable lens whose angle or position can be controlled.
Fig. 24

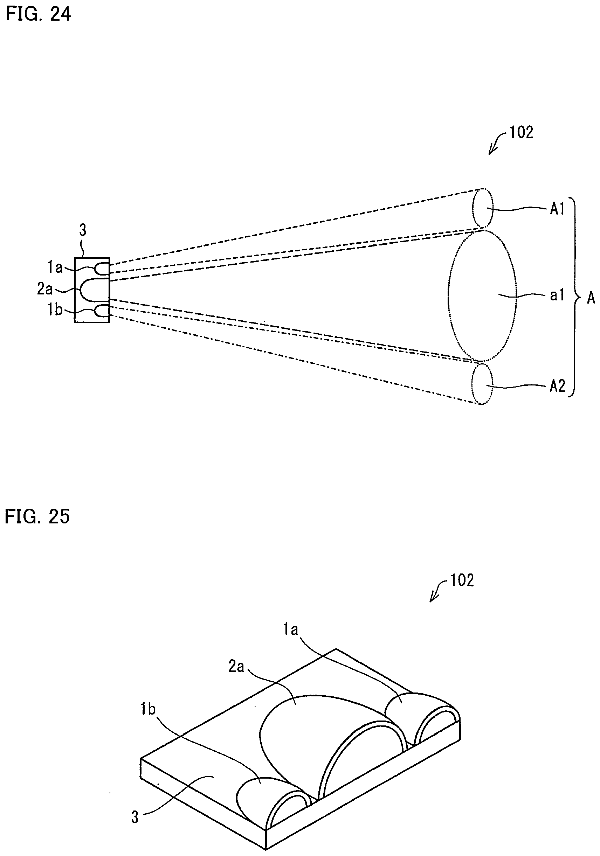

   Fig. 24 is a plan view schematically illustrating a configuration of a headlamp system in accordance with Embodiment 3.
Fig. 25
   Fig. 25 is a perspective view illustrating the headlamp system illustrated in Fig. 24.
Fig. 26

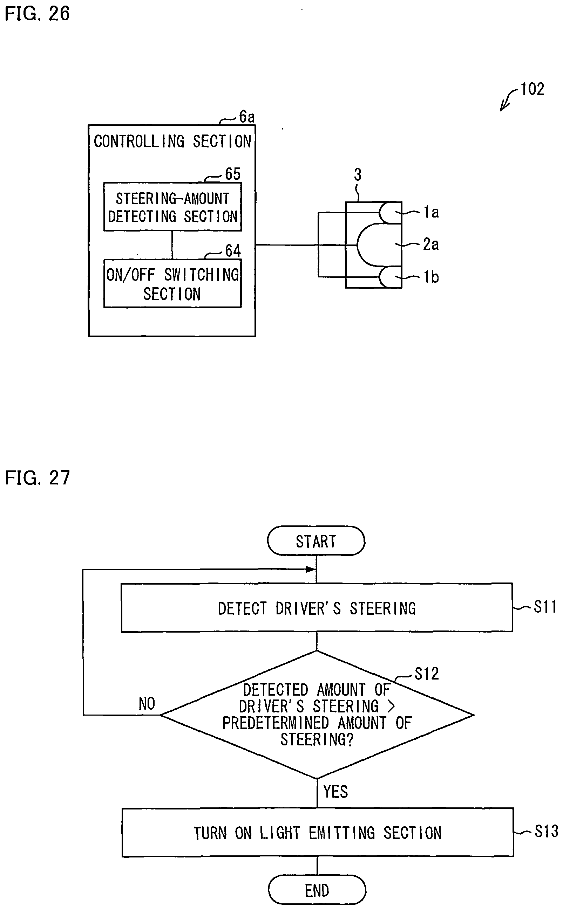

   Fig. 26 is a block diagram illustrating an internal configuration of the headlamp system illustrated in Fig. 24.
Fig. 27
   Fig. 27 is a flow chart illustrating the flow of the operation of the headlamp system illustrated in Fig. 26.
Fig. 28

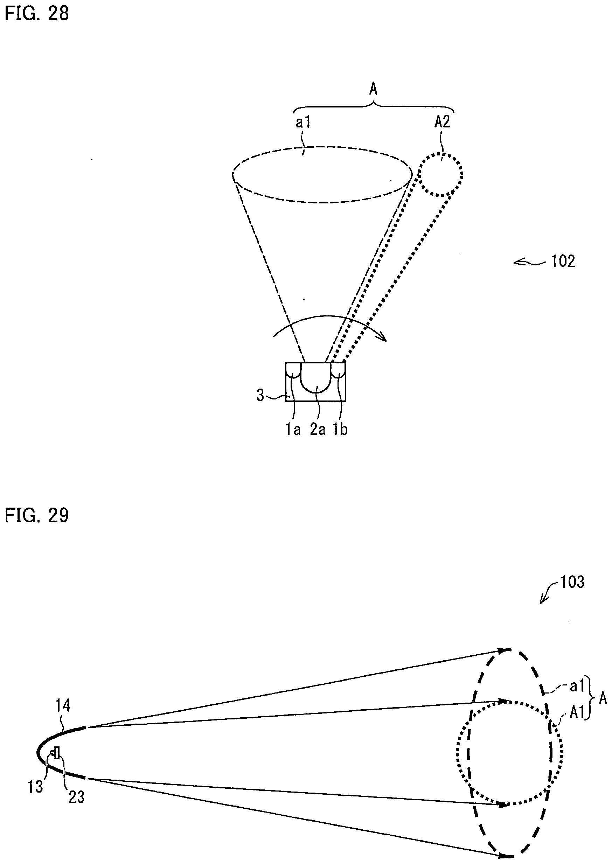

   Fig. 28 is a view schematically illustrating the headlamp system in motion, which headlamp system is illustrated in Fig. 26.
Fig. 29
   Fig. 29 is a plan view schematically illustrating a configuration of a headlamp system in accordance with Embodiment 4.
Fig. 30

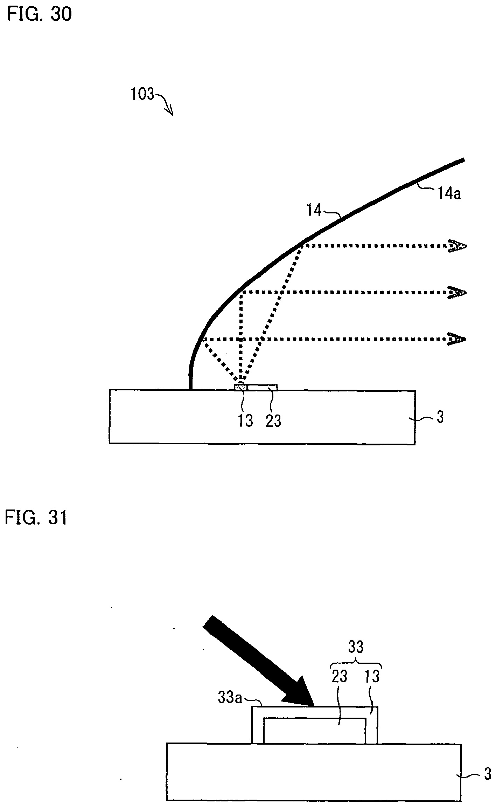

   Fig. 30 is a cross-sectional view illustrating a configuration of main components of the headlamp system illustrated in Fig. 29.
Fig. 31
   Fig. 31 is a cross-sectional view schematically illustrating a configuration of an integrated LED integrally made up of a light emitting section and an LED.
Fig. 32

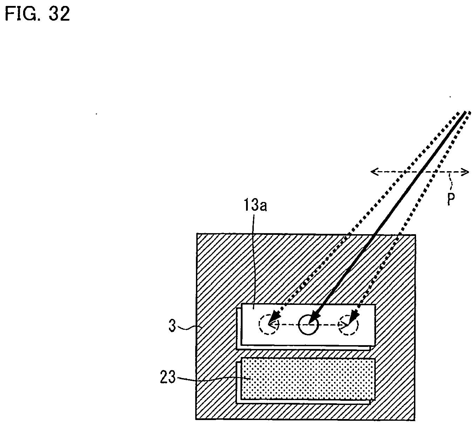

   Fig. 32 is a plan view illustrating a modification of the light emitting section illustrated in Fig. 30.
Fig. 33
   Fig. 33 is a view illustrating a light distributing pattern of a conventional headlamp of a region-dividing type.
Fig. 34
   Fig. 34 is a view illustrating a light distributing pattern of a conventional headlamp of a stacking type.

### Description of Embodiments

It is pointed out that the embodiments described hereafter are not all according to the invention. Only the embodiments falling under the scope of the claims are to be considered as according to the invention, for example the embodiments of Fig. 30 and Fig. 32 are according to independent claim 1 and the embodiments of Fig. 1-6, 8-12, 24-29 are according to independent claim 2.

### [Embodiment 1]

The following description will discuss, with reference to Figs. 1 through 7, Embodiment 1 of an illumination device in accordance with the present invention. Embodiment 1 illustrates a case where the illumination device is applied to an automobile (vehicle) headlamp system.

However, it should be noted that the illumination device in accordance with the present invention can also be used (i) for headlamps of other vehicles than automobiles and (ii) as an illumination device for other purposes than vehicle headlamps.

### [Configuration of Headlamp System 100]

A configuration of a headlamp system 100 in accordance with Embodiment 1 will be described below with reference to Figs. 1 through 4.

Fig. 1 is a plan view schematically illustrating the headlamp system 100, and Fig. 2 is a perspective view illustrating the headlamp system 100 illustrated in Fig. 1. The headlamp system 100 includes a laser light source unit 1a, an LED light source unit 2a, and an LED light source unit 2b (see Figs. 1 and 2).

The laser light source unit 1a, the LED light source unit 2a, and the LED light source unit 2b, are provided on a metal base 3 and are arranged in line perpendicular to a direction in which the headlamp system 100 distributes light. The laser light source unit 1a is provided so as to be sandwiched between the LED light source units 2a and 2b.

The headlamp system 100 produces a desired light distribution pattern A by combining together (i) a light-distributed spot (a first light-distributed region) A1 to which light emitted from the laser light source unit 1a and (ii) light-distributed areas (together as a second light-distributed region) al and a2 to which light beams emitted from the LED light source unit 2a and 2b are distributed respectively.

Note that, in actual use, two of the headlamp systems 100 are provided at respective front lateral ends of an automobile. For convenience, however, each Embodiment described later will discuss a case where a single headlamp system 100 is used for illumination.

Note also that, of the following descriptions of configurations of the laser light source unit 1a, the LED light source units 2a and 2b, and the metal base 3, the description of the configuration of the LED light source unit 2b will be omitted since the LED light source units 2a and 2b are provided in nearly the same ways.

### (Laser Light Source Unit 1a)

Fig. 3 is a cross-sectional view schematically illustrating the configuration of the laser light source unit 1a included in the headlamp system 100 illustrated in Fig. 2. As illustrated in Fig. 3, the laser light source unit 1a includes a semiconductor laser element 11, a light converging lens 12, a light emitting section 13, and a reflector 14 (light distributing section).

### (Semiconductor Laser Element 11)

The semiconductor laser element 11 is a light emitting element that functions as an excitation light source for emitting excitation light. The semiconductor laser element 11 can have, per chip, a single light emitting point or a plurality of light emitting points.

The use of a laser beam as excitation light makes it possible to efficiently excite a fluorescent material contained in the light emitting section 13 (described later). This makes it possible to (i) produce light having greater luminance than light produced by a conventional light source and thus (ii) downsize the light emitting section 13 itself.

More than one semiconductor laser element 11 may be provided. In this case, the plurality of semiconductor laser elements 11 emit respective laser beams as excitation light beams. While, as in Embodiment 1, it is possible to employ a single semiconductor laser element 11, it is easier, in terms of producing high-output laser beams, to employ a plurality of semiconductor laser elements 11. In the case where the plurality of semiconductor laser elements 11 are provided, it is possible that semiconductor laser elements 11 emit respective laser beams differing from one another in wavelength so that laser beams of more than one kind are blended. For example, it is conceivable to combine a blue laser beam and a green laser beam, or to combine a bluish-purple laser beam and a blue laser beam.

The wavelength of a laser beam emitted from the semiconductor laser element 11 is, for example, 405 nm (bluish-purple) or 450 nm (blue). However, the wavelength of the laser beam is not limited to such wavelengths, and can therefore be suitably selected in accordance with a kind of fluorescent material contained in the light emitting section 13.

In Embodiment 1, the semiconductor laser element 11 (i) is mounted on a metal package having a diameter of 9 mm and (ii) emits, with 1-W output, a laser beam having a wavelength of 405 nm (blue).

A wire 4 is connected to the semiconductor laser element 11, and electric power and the like is supplied to the semiconductor laser element 11 via the wire 4.

### (Light Converging Lens 12)

The light converging lens 12 adjusts an irradiating range of a laser beam emitted from the semiconductor laser element 11 so that the light emitting section 13 is properly irradiated with the laser beam. The light converging lens 12 causes the light emitting section 13 to be irradiated with the laser beam via a window 14b of the reflector 14.

In Embodiment 1, the light converging lens 12 adjusts the irradiating range such that an irradiated range, on the light emitting section 13, to be irradiated with the laser beam has a diameter of 0.3 mm.

Note that, although, in Embodiment 1, the light converging lens 12 is made up of a single lens, the light converging lens 12 can be made up of a plurality of lenses.

### (Light Emitting Section 13)

The light emitting section (first light emitting section) 13 (i) emits fluorescence upon reception of a laser beam emitted from the semiconductor laser element 11 and (ii) contains a fluorescent material (fluorescent substance) that emits fluorescence upon absorption of a laser beam. The light emitting section 13 is prepared by, for example, (a) dispersing/ solidifying particles of a fluorescent material in a sealant or (b) collecting particles of a fluorescent material on a substrate made of a material of high thermal conductivity.

The light emitting section 13 is provided (i) on the metal base 3 and (ii) substantially at a focal point of the reflector 14. This allows light emitted from the light emitting section 13 to be reflected by a curved reflective surface of the reflector 14 so that an optical path of the light is controlled with high accuracy.

The light emitting section 13 is provided on a slope 3a provided on the metal base 3 such that a surface E, which is an extension of an irradiation surface irradiated with a laser beam, is in contact with an end portion of the reflector 14, which end portion has an opening 14a. Therefore, light emitted from the light emitting section 13 can be efficiently reflected by the reflector 14 so as to be distributed, without directly leaking out of the unit.

Also, since the slope 3a is provided, a light emitting point of the light emitting section 13 is not directly visible from outside. This prevents a phenomenon that, when a headlamp is seen from outside, part of the headlamp is brighter than the rest, which phenomenon causes an onlooker to be dazzled.

Note that an antireflection mechanism for preventing reflection of a laser beam is preferably provided on the irradiation surface of the light emitting section 13. This allows (i) a laser beam emitted from the semiconductor laser element 11 to be prevented from being reflected by the irradiation surface and therefore (ii) efficiency in use of a laser beam to be enhanced.

Examples of a fluorescent material for the light emitting section 13 encompass an oxynitride fluorescent material (e.g. a sialon fluorescent material) and a III-V compound semiconductor nanoparticle fluorescent material (e.g. indium phosphide: InP). These fluorescent materials are highly heat resistant to a high-output (and/or highly optically dense) laser beam emitted from the semiconductor laser element 11, and are therefore the most suitable as laser-illuminating light sources. The fluorescent material for the light emitting section 13 is not limited to them, and can be another fluorescent material such as a nitride fluorescent material.

By law, the color of illuminating light of a headlamp system 100 for an automobile shall be white having chromaticity within a prescribed range. Therefore, the light emitting section 13 contains a fluorescent material selected to emit white illuminating light.

For example, white light can be obtained by irradiating, with a laser beam of 405 nm, a light emitting section 13 containing a blue fluorescent material, a green fluorescent material, and a red fluorescent material. As one alternative, white light can be obtained by irradiating, with a laser beam of 450 nm (blue) (or what is known as a near-blue laser beam having a peak wavelength in the range of 440 nm to 490 nm), a light emitting section 13 containing a yellow fluorescent material (or a green fluorescent material and a red fluorescent material).

Examples of a sealant of the light emitting section 13 include glass materials (inorganic glass and organic-inorganic hybrid glass) and resin materials such as silicon resin. Low-melting glass materials can be used as the glass materials. The sealant is preferably a highly transparent material. In a case where a laser beam emitted from the semiconductor laser element 11 has high output, the sealant is preferably a material having high heat resistance.

In Embodiment 1, the light emitting section 13 contains three kinds (RGB) of fluorescent materials: a red fluorescent material (CaAlSiN₃:Eu), a green fluorescent material (-SiAlON:Eu), and a blue fluorescent material ((BaSr)MgAl₁₀O₁₇:Eu). This causes the light emitting section 13 to emit white fluorescence upon reception of a laser beam which (i) has been emitted from the semiconductor laser element 11 and (ii) has a wavelength of 405 nm. Additionally, the light emitting section 13 is (a) prepared by mixing fluorescent powder in a resin such that the light emitting section 13 has a form of a thin film having a square shape with 1-mm sides from a top view and having a thickness of 0.1 mm and (b) is then applied to the slope 3a.

In Embodiment 1, in which the light emitting section 13 is configured as described above, it is made possible to (i) have the light emitting section 13 produce light output of 80 lumens and (ii) provide the light emitting section 13 as a point source of light producing light having such high luminance as 320 cd/mm².

Note that it is possible to provide, in the vicinity of the focal point of the reflector 14, a scatterer, as the light emitting section 13, for scattering a laser beam by diffusely reflecting the laser beam. In the case where a scatterer is used as the light emitting section 13, (i) the scatterer receives a laser beam, which has been emitted from the semiconductor laser element 11, and then scatters the laser beam and (ii) the laser beam thus scattered is distributed, as illuminating light, by the reflector 14. In this case, in order to produce white illuminating light, it is possible to use a plurality of semiconductor laser elements 11 in combination per single reflector 14, which semiconductor laser elements 11 emit laser beams differing in wavelength from one another.

### (Reflector 14)

The reflector (light distributing section) 14 reflects light emitted from the light emitting section 13 so as to distribute the light to the light-distributed spot A1. Examples of the reflector 14 encompass a member with a metal film formed thereon or a member made from metal.

Part of the reflective surface of the reflector 14 is at least part of a partial curved surface obtained through (i) forming a curved surface (parabolic curved surface) by rotating a parabola around a symmetry axis (serving as a rotation axis) of the parabola and then (ii) cutting the parabolic curved surface along a flat surface in which the rotation axis is contained. Also, the reflector 14 has the semicircle opening 14a facing a direction in which light emitted from the light emitting section 13 is distributed.

The light emitting section 13 is provided substantially at the focal point of the reflector 14. The reflector 14, which has a parabolically-curved reflective surface, (i) transforms light, which has been emitted from the light emitting section 13, into light beams which are virtually parallel to one another and then (ii) emits the light beams ahead from the opening 14a. This allows an optical path of light emitted from the light emitting section 13 to be (a) efficiently controlled in a narrow solid angle and (b) distributed to the light-distributed spot A1. Accordingly, the light distribution characteristic of the laser light source unit 1a can be enhanced.

The semiconductor laser element 11 is provided outside the reflector 14. The reflector 14 has a window 14b that transmits or lets a laser beam therethrough. The window 14b can be a through hole or can be a member having a transparent part capable of transmitting a laser beam therethrough. For example, it is possible to provide, as the window 14b, a transparent plate having a filter for (i) transmitting a laser beam therethrough and (ii) reflecting white light (fluorescence emitted from the light emitting section 13). With this configuration, it is possible to prevent, from escaping through the window 14b, white light emitted from the light emitting section 13.

In Embodiment 1, the reflector 14 is prepared by coating an inner surface of a resin half-parabolic mirror with aluminum. The reflector 14 is 8.3-mm long in the light-distributing direction, and the opening 14a has a radius of 10 mm.

Note that the reflector 14 can be a parabolic mirror having an opening in a closed-circle shape or part of the closed-circle shape. Note also that (i) it is possible to use, as the reflector 14, an elliptical mirror, a free-form mirror, or a multifaceted multi-reflector (other than a parabolic mirror) and (ii) it is possible that part of the reflector 14 is not part of the parabolic curved surface.

Also, the laser light source unit 1a can include, at the opening 14a of the reflector 14, a wavelength blocking coat 22 (see Fig. 19) for blocking light having specific wavelengths.

The laser light source unit 1a configured as such can (i) emit light having high luminance with excellent light distribution characteristics and therefore (ii) brightly illuminate a small light-distributed spot A1 located far away.

### (LED Light Source Unit 2a)

Fig. 4 is a cross-sectional view schematically illustrating the configuration of the LED light source unit 2a included in the headlamp system 100 illustrated in Fig. 2. As illustrated in Fig. 4, the LED light source unit 2a includes an LED (Light-Emitting Diode) 23 and a reflector (light distributing section) 24.

### (LED 23)

The LED 23 (second light emitting section) is prepared by scattering, on and around an LED chip, particles of a fluorescent material. The LED chip and the fluorescent material are sealed by a sealant.

The LED 23 is provided (i) on the metal base 3 and (ii) schematically at a focal point of the reflector 24. This allows light emitted from the LED 23 to be reflected by a curved reflective surface of the reflector 24 so that an optical path of the light is controlled.

A wire (not illustrated) is connected to the LED 23, and electric power etc. is supplied to the LED 23 via the wire.

Note that, in Embodiment 1, the LED 23 is used as a light source of the LED light source unit 2a. However, the light source is not limited to the LED 23, but can be, for example, a halogen lamp or an HID lamp (High-Intensity Discharge lamp).

### (Reflector 24)

The reflector 24 (light distributing section) reflects light emitted from the LED 23 so as to distribute the light to the light-distributed area a1. Examples of the reflector 24 encompass a member with a metal film formed thereon or a member made of metal.

Part of the reflective surface of the reflector 24 is at least part of a partial curved surface obtained through (i) forming a curved surface (parabolic curved surface) by rotating a parabola around a symmetry axis (serving as a rotation axis) of the parabola and then (ii) cutting the parabolic curved surface along a flat surface in which the rotation axis is contained. Also, the reflector 24 has a semicircle opening 24a facing a direction in which light emitted from the LED 23 is distributed.

In Embodiment 1, the reflector 24 is prepared by coating an inner surface of a resin half-parabolic mirror with aluminum. The reflector 24 is 40-mm long in the light-distributing direction, and the opening 24a has a radius of 40 mm.

Note that the reflector 24 can be a parabolic mirror having an opening in a closed-circle shape or part of the closed-circle shape. Note also that (i) it is possible to use, as the reflector 24, an elliptical mirror, a free-form mirror, or a multifaceted multi-reflector (other than a parabolic mirror) and (ii) it is possible that part of the reflector 24 is not part of the parabolic curved surface.

Additionally, the LED light source unit 2a can have, at the opening 24a of the reflector 24, a member such as a lens (not illustrated) for controlling the light distribution.

### (Metal Base 3)

The metal base 3 is (i) a supporting member that supports the laser light source unit 1a, the LED light source unit 2a, and the LED light source unit 2b and (ii) made of metal, such as aluminum, copper, or iron. This causes the metal base 3 to have high thermal conductivity. Therefore, it is possible to efficiently dissipate heat generated by the semiconductor laser element 11, by the light emitting section 13, and by the LED 23, all of which are provided on the metal base 3.

A material for the metal base 3 is not limited to metal: the metal base 3 may contain a material of high thermal conductivity (other than metal) such as highly thermally conductive ceramic, glass, or sapphire. Meanwhile, it is preferable that a surface of the slope 3a, to which the light emitting section 13 is to be applied, is configured to function as a reflective surface. This allows (i) a laser beam, which has entered through the irradiation surface of the light emitting section 13 and then has been converted into fluorescence, to be reflected by the reflective surface and then directed toward the reflector 14 and (ii) a laser beam, which has entered through the irradiation surface of the light emitting section 13 and has not been converted into fluorescence, to be reflected by the reflective surface and then redirected into the light emitting section 13 so that the laser beam can be converted into fluorescence.

### [Operation of Headlamp System 100]

The following description will discuss, with reference to Fig. 5, the operation of the headlamp system 100. Automobile headlamps are required to meet certain standards established for the light distribution characteristics determining the light intensity, the direction of the optical axis, the headlight distribution, and/or the like. The standards for the light distribution characteristic vary, depending on the country. Therefore, it is necessary to create a light distribution pattern meeting a variety of such standards.

Fig. 5 is a view schematically illustrating the light distribution pattern A which is produced by the headlamp system 100 and projected on a reference surface 20. The reference surface 20 is a vertical flat surface provided (i) so as to stand in a direction in which a vehicle equipped with the headlamp system 100 moves forward and (ii) at a distance of approximately 25 m away from the vehicle.

As illustrated in Fig. 5, the headlamp system 100 is arranged such that the light-distributed spot A1, to which light emitted from the light emitting section 13 of the laser light source unit 1a is distributed, falls in a central part of the overlap between the light distributed areas a1 and a2 to which light emitted from the LEDs 23 is distributed.

Since it is a laser beam that excites the fluorescent material contained in the light emitting section 13 of the laser light source unit 1a, the laser light source unit 1a is capable of producing, with use of the light emitting section 13, light brighter than light produced by the respective LEDs 23 of the LED light source units 2a and 2b. This allows the reflector 14 to distribute light, which has been emitted from the light emitting section 13, (i) to a small region located further and (ii) without diffusing the light.

Therefore, it is possible to control the luminous intensity in a locally-specified manner, such as illuminating the central part of the light distribution pattern A more brightly than the rest of the pattern, by, for example, (i) distributing light, which has been emitted from the LEDs 23, to the light-distributed areas a1 and a2 that are relatively large in area and (ii) fixing the light-distributed spot A1, to which light emitted from the light emitting section 13 is distributed, on a region specifically intended to be illuminated more brightly than the others (see Fig. 5).

As described above, the headlamp system 100 includes the light emitting section 13 and the LEDs 23, and is capable of individually distributing, with use of the reflectors 14 and 24, respective light beams emitted from the light emitting section 13 and the LEDs 23. This enables efficient illumination taking advantage of the characteristics of the light emitting section 13 and the LEDs 23.

### [Summary of Embodiment 1]

The headlamp system 100 in accordance with Embodiment 1 includes (i) the light emitting section 13 for emitting light upon reception of a laser light, (ii) the LEDs 23 for emitting light by use of a principle of light emission differing from one used by the light emitting section 13, and (iii) the reflectors 14 and 24 for distributing, to the light-distributed spot A1, the light emitted from the light emitting section 13.

The headlamp system 100 includes (i) the light emitting section 13 for emitting light upon reception of a laser beam and (ii) the LEDs 23 for emitting light by use of a principle of light emission differing from that used by the light emitting section 13. The reflectors 14 and 24 redirect light beams, which have been emitted from the light emitting section 13 and the LEDs 23 respectively, to the light-distributed spot A1 and the light-distributed areas a1 and a2, respectively.

The light emitting section 13 employs the principle of light emission by which the light emitting section 13 emits light upon reception of a laser beam. This allows (i) the light emitting section 13 to emit light having higher luminance than light produced by the conventional light sources and (ii) the light emitting section 13 itself to be downsized. Therefore, light emitted from the light emitting section 13 can be distributed, by the reflector 14, (a) to a small region located further and (b) without being diffused.

Besides such a light emitting section 13 of the headlamp system 100, the headlamp system 100 also includes the LEDs 23 that, in order to emit light, employs the principle of light emission differing from that employed by the light emitting section 13. The respective reflectors 24 distribute light beams, which have been emitted from the respective LEDs 23, to the light-distributed areas a1 and a2 respectively.

Thus, with the headlamp system 100, it is possible that the reflectors 14 and 24 distribute light beams emitted from the light emitting section 13 and the LEDs 23 respectively. Therefore, with the headlamp system 100, it is possible to arrange, as needed, the light-distributed spot A1 and the light-distributed areas a1 and a2, independently of each other.

Therefore, with the headlamp system 100, it is possible to carry out such control of the luminous intensity as (i) distributing light, which has been emitted from the LEDs 23, to a large area (combination of the light-distributed areas a1 and a2) and (ii) distributing- light, which has been emitted from the light emitting section 13, to a specific region (the light-distributed spot A1) intended to be illuminated more brightly than the other.

Thus, with the headlamp system 100, it is possible that the reflectors 14 and 24 distribute light beams emitted from the light emitting section 13 and the LEDs 23 respectively. This allows for efficient illumination taking advantage of the respective characteristics of the light emitting section 13 and the LEDs 23.

In conclusion, with the configuration employed in Embodiment 1, it is possible to provide a headlamp system 100 using, in combination, characteristics of a laser light source and other light sources.

### (Modifications)

Modifications of the headlamp system 100 in accordance with Embodiment 1 will be described below with reference to Fig. 6(a) through Fig. 7.

### (Modification 1)

In Embodiment 1, the headlamp system 100 is arranged so that the light-distributed spot A1, to which light emitted from the light emitting section 13 is distributed, is arranged to fall in the central part of the light distribution pattern A (see Fig. 5). However, the present invention is not limited to such. Specifically, the headlamp system 100 can be configured to produce other forms of the desired light distribution pattern A by arranging, as needed, the light-distributed spot A1 and the light-distributed areas a1 and a2.

For example, it is possible to arrange the light-distributed spot A1, to which light emitted from the light emitting section 13 is distributed, so as to fall in a region around the light-distributed areas a1 and a2. This allows the headlamp system 100 to illuminate a larger area.

It is also possible to arrange the light-distributed spot A1 and the light-distributed areas a1 and a2 so as to fulfill the standards of light distribution characteristics of an automobile headlamp.

Fig. 6(a) and Fig. 6(b) are views schematically illustrating modifications of the light distribution pattern A projected on the reference surface 20, Fig. 6(a) illustrating a light distribution pattern L fulfilling the standards of the light distribution characteristics of a passing beam headlamp, and Fig. 6(b) illustrating a light distribution pattern H fulfilling the standards of the light distribution characteristics of a driving beam headlamp.

As illustrated in Fig. 6(a) and Fig. 6(b), it is possible to form (i) the light distribution pattern L by inserting a cut-off line cutting off a top edge part of the overlap between the light-distributed areas a1 and a2 and (ii) the light distribution pattern H by combining the light distribution pattern L and the light-distributed spot A1 together.

As described above, it is possible to form, with light emitted from the laser light source unit 1a, the light distribution pattern H (i) fulfilling the standards of the light distribution characteristics of a driving beam headlamp and (ii) capable of illuminating up to a further distance. This makes it possible to appropriately achieve a headlamp system 100 fulfilling the standards of the light distribution characteristic.

### (Modification 2)

In Embodiment 1, the laser light source unit la includes, as the reflector 14, a half-parabolic mirror (see Fig. 3). In an exemplary embodiment not according to the invention, the laser light source unit 1a may include a parabolic mirror having an opening in a closed-circle shape.

Fig. 7 is a cross-sectional view illustrating a configuration of a modification of the laser light source unit 1a illustrated in Fig. 3. As illustrated in Fig. 7, a laser light source unit 1A includes a reflector 14A which is a parabolic mirror.

Part of the reflector 14A is at least part of a curved surface (parabolic curved surface) obtained by rotating a parabola around a symmetry axis (serving as a rotation axis) of the parabola. Also, the reflector 14A has a round opening 14a facing a direction in which fluorescence emitted from the light emitting section 13 is reflected by the reflector 14A.

In the laser light source unit 1A including such a reflector 14A which is a parabolic mirror, the light emitting section 13 is (i) fixed to one end of a metal pillar member 15 and (ii) provided substantially at a focal point of the reflector 14A.

The other end of the pillar member 15 extends so as to perforate the reflector 14A and is connected with a heat releasing member of high thermal conductivity (not illustrated). With this configuration, heat generated by irradiating the light emitting section 13 with a laser beam can be efficiently dissipated by being conducted to the heat releasing member through the pillar member 15.

The reflector 14A can be prepared by, for example, coating an inner surface of a resin parabolic mirror with aluminum. Such a reflector 24 is 8.3-mm long in the light-distributing direction, and the opening 14a has a diameter of 30 mm.

As described above, the form of the reflector 14 is not particularly limited. In fact, a mirror having an elliptical form or a free form, or a multifaceted multi-reflector can be used in stead of a parabolic mirror as the reflector 14.

### [Embodiment 2]

The following description will discuss, with reference to Figs. 8 through 23, Embodiment 2 of the illumination device in accordance with the present invention. Note that, in Embodiment 2, members whose functions are the same as those of Embodiment 1 are given the same reference numerals/signs accordingly, and their description will be omitted.

### [Configuration of Headlamp System 101]

A configuration of a headlamp system 101 in accordance with Embodiment 2 will be described below with reference to Figs. 8 through 10.

Fig. 8 is a plan view schematically illustrating the configuration of the headlamp system 101, and Fig. 9 is a perspective view illustrating the headlamp system 101 illustrated in Fig. 8. As illustrated in Fig. 8 and Fig. 9, the headlamp system 101 includes a laser light source unit 1a and an LED light source unit 2a.

The laser light source unit 1a and the LED light source unit 2a are (i) arranged in line perpendicular to a direction in which the headlamp system 101 distributes light and (ii) provided on a metal base 3.

The headlamp system 101 produces a desired light-distributed pattern A by locating a light-distributed spot A1, to which the laser light source unit 1a distributed light, in a specific region within a light-distributed area a1, to which the LED light source unit 2a distributes light.

Fig. 10 is a block diagram illustrating an internal configuration of the headlamp system 101 in accordance with Embodiment 2. As illustrated in Fig. 10, the headlamp system 101 further includes a camera 5 and a controlling section 6 (in addition to the laser light source unit 1a and the LED light source unit 2a).

In the following description of each member included in the headlamp system 101, the description of the laser light source unit 1a and of the LED light source unit 2a will be omitted since these two members are provided in nearly the same ways as in Embodiment 1.

### (Camera 5)

The camera 5 is (i) used for continuously photographing images in front of a vehicle, which images include the light-distributed area a1 and (ii) provided in the vicinity of a rear-view mirror located at the front of the vehicle's interior. It is possible to use, as the camera 5, a video image capturing device for capturing a video image at a frame rate for television.

The camera 5 starts capturing a video image at time at which the LED light source unit 2a is turned on, and sends the captured video image to the controlling section 6.

### (Controlling Section 6)

The controlling section 6 controls, based on the information obtained from a video image captured by the camera 5, the operation of the laser light source unit 1a. The controlling section 6 includes an object detecting section 61, an object identifying section 62, a location shifting section 63, and an ON/OFF switching section 64.

### (Object Detecting Section 61)

The object detecting section (detecting section) 61 is for analyzing a video image captured by the camera 5 and then detecting objects in the video image. Specifically, the object detecting section 61, when receiving a video image from the camera 5, detects an object located in the light-distributed area a1 in the video image.

In a case where the object detecting section 61 detects an object located in the light-distributed area a1 in the video image, the object detecting section 61 sends, to the object identifying section 62, a detection signal indicative of the coordinates, in the video image, of the object thus detected.

### (Object Identifying Section 62)

The object identifying section (identifying section) 62 is for identifying a kind of an object located at coordinates indicated by a detection signal sent from the object detecting section 61. Specifically, the object identifying section 62, when receiving a detection signal sent from the object detecting section 61, (i) collects the features (such as traveling speed, shape, and position) of an object located at coordinates indicated by the detection signal, and then (ii) produce a characteristic value of the object by converting the features into numerical values.

Then, the object identifying section 62 searches, in a reference value table, for a reference value apart from the characteristic value by a predetermined amount or less, which reference value table (i) is stored in a memory (not illustrated) and (ii) saves reference values produced by converting, into numerical values, characteristic values of objects of various kinds.

Examples of the reference values preregistered and saved in the reference value table include reference values corresponding to traffic signs, pedestrians, obstacles expected on the road, etc. When a reference value, which is apart from a characteristic value of a detected object by a predetermined amount or less, is specified, the object identifying section 62 identifies the object detected by the object detecting section 61 as an object indicated by the reference value (i.e. as an object whose corresponding reference value is preregistered in the reference value table).

When an object detected by the object detecting section 61 is identified as an object whose corresponding reference value is preregistered in the reference value table, the object identifying section 62 sends, to the location shifting section 63, an identification signal indicative of coordinates of the object thus detected.

### (Location Shifting Section 63)

The location shifting section 63 is for shifting, based on coordinates of an object indicated by an identification signal sent from the object identifying section 62, the location of the light-distributed spot A1 so that light emitted from a light emitting section 13 is distributed toward the object. The location shifting section 63 shifts the location of the light-distributed spot A1 by, specifically, adjusting an angle of a reflector 14.

When the location of the light-distributed spot A1 is shifted so that light emitted from the light emitting section 13 is distributed toward the object, the location shifting section 63 sends, to the ON/OFF switching section 64, a control signal indicative of the location shifting of the light-distributed spot A1.

### (ON/OFF Switching Section 64)

The ON/OFF switching section (switching section) 64 is for switching, based on a control signal sent from the location shifting section 63, between on and off states of the light emitting section 13. Specifically, the ON/OFF switching section 64, when receiving a control signal sent from the location shifting section 63, starts supplying electric power to a semiconductor laser element 11. This causes the semiconductor laser element 11 to emit a laser beam, thereby turning on the light emitting section 13 to emit light. Through this process, the light emitted from the light emitting section 13 is distributed toward an object detected by the object detecting section 61.

### [Operation of Headlamp System 101]

The following description will discuss, with reference to Fig. 11 and Fig. 12, the operation of the headlamp system 101. Fig. 11 is a flow chart illustrating the flow of the operation of the headlamp system 101, and Fig. 12 is a view schematically illustrating the headlamp system 101 in motion.

As illustrated in Fig. 11, when the LED light source unit 2a is turned on, the camera 5 starts capturing a video image of the light-distributed area a1 (S1). By this, the camera 5 captures a video image in front of the vehicle with an angle of view large enough to capture the entire light-distributed area a1. Then the camera 5 sends the video image to the controlling section 6.

Following S1, the object detecting section 61 analyzes the video image captured by the camera 5 and then detects an object in the light-distributed area a1 in the video image (S2). In a case where the object detecting section 61 detects an object, the object detecting section 61 sends, to the object identifying section 62, a detection signal indicative of coordinates of the object thus detected.

Following S2, the object identifying section 62 identifies a kind of the object located at the coordinates indicated by the detection signal (S3). Specifically, the object identifying section 62, when receiving the detection signal sent from the object detecting section 61, (i) collects the features (such as traveling speed, shape, and position) of the object located at the coordinates indicated by the detection signal, and then (ii) produce a characteristic value of the object by converting the features into numerical values.

Then, the object identifying section 62 searches, in the reference value table, for a reference value apart from the characteristic value by a predetermined amount or less. When a reference value, which is apart from the characteristic value of the detected object by the predetermined amount or less, is specified, the object identifying section 62 identifies the object detected by the object detecting section 61 as an object indicated by the reference value (i.e. as an object whose corresponding reference value is preregistered in the reference value table).

When the object detected by the object detecting section 61 is identified as the object whose corresponding reference value is preregistered in the reference value table, the object identifying section 62 sends, to the location shifting section 63, an identification signal indicative of the coordinates of the object thus detected. For example, in a case where an object (pedestrian) O is detected (see Fig. 12), the object identifying section 62 (i) identifies a kind of the object O as a pedestrian and (ii) sends, to the location shifting section 63, an identification signal indicative of the coordinates of the object O thus detected in the video image.

Following S3, the location shifting section 63 shifts, based on the coordinates indicated by the identification signal, the location of the light-distributed spot A1 so that light emitted from the light emitting section 13 is distributed toward the object thus detected (S4). In the case where the object (pedestrian) O is detected (see Fig. 12), the location shifting section 63 shifts, by adjusting the angle of the reflector 14, the location of the light-distributed spot A1 so that light emitted from the light emitting section 13 is distributed toward the object (pedestrian) O. When the location of the light-distributed spot A1 is shifted so that light emitted from the light emitting section 13 is distributed toward the object, the location shifting section 63 sends, to the ON/OFF switching section 64, a control signal indicative of the location shifting of the light-distributed spot A1.

Following S4, the ON/OFF switching section 64 causes, based on the control signal, the light emitting section 13 to be turned on (S5). Specifically, the ON/OFF switching section 64, when receiving the control signal, starts supplying electric power to the semiconductor laser element 11 so that the semiconductor laser element 11 emits a laser beam so as to cause the light emitting section 13 to be turned on.

This makes it possible to increase the luminous intensity of light, which is distributed toward the object O, thereby illuminating the object O more brightly.

As described above, with the headlamp system 101, it is possible, in a case where an object detected by the object detecting section 61 is identified as a traffic sign, a pedestrian, or an obstacle, to increase the luminous intensity of light to be distributed to the object, thereby illuminating the object more brightly.

Since the headlamp system 101 is capable of brightly illuminating traffic signs, pedestrians, obstacles, and the like, it is possible, with eyes, to (i) accurately read traffic signs and (ii) clearly recognize pedestrians and obstacles. This can realize a safe driving environment.

Note that a method for identifying kinds of objects in video images captured by the camera 5 is not limited to the one described above, but can be commonly-known ones.

Note also that the reference table can also save reference values corresponding to automobiles, motorcycles, and the like, other than the ones described above. This allows for the optimum control of the light intensity; the optimum control according to a kind of an object identified by the object identifying section 62.

### [Summary of Embodiment 2]

As described above, the headlamp system 101 in accordance with Embodiment 2 includes (i) the light emitting section 13 that emits light upon reception of a laser beam, (ii) the LED 23 that emits light with the use of the principle of light emission differing from the one used by the light emitting section 13, (iii) the reflector 14 and a reflector 24 that distribute light beams, which are emitted from the light emitting section 13 and the LED 23 respectively, to the light-distributed spot A1 and the light-distributed area a1 respectively, and further (iv) the location shifting section 63 that shifts the location of the light-distributed spot A1 in relation to that of the light-distributed area a1.

Since the headlamp system 101 includes the location shifting section 63 that shifts the location of the light-distributed spot A1 in relation to that of the light-distributed area a1, it is possible to shift the distributing direction of light which is emitted from the light emitting section 13.

Therefore, with the headlamp system 101, it is possible to carry out such control of a luminous intensity that, for example, light emitted from the light emitting section 13 is distributed to a specific region of the light-distributed area a1, which specific region is intended to be illuminated more brightly than the rest.

Additionally, the headlamp system 101 in accordance with Embodiment 2 further includes the object detecting section 61 that detects an object within the light-distributed area a1. The location shifting section 63 shifts the location of the light-distributed spot A1 such that light of the light emitting section 13 is distributed to the object detected by the object detecting section 61.

Since the headlamp system 101 further includes the object detecting section 61, it is possible that the location shifting section 63 shifts the location of the light-distributed spot A1 such that light emitted from the light emitting section 13 is distributed to an object detected by the object detecting section 61.

Therefore, with the headlamp system 101, it is possible to carry out such control of the luminous intensity that the luminous intensity of light distributed to a detected object is increased so that the object is illuminated with greater brightness.

Moreover, the headlamp system 101 in accordance with Embodiment 2 (i) further includes the object identifying section 62 that identifies, by image recognition, a kind of an object detected by the object detecting section 61 and (ii) is arranged such that the location shifting section 63 shifts, when a kind of an object identified by the object identifying section 62 matches a kind of the preregistered object, the location of the light-distributed spot A1 so that light of the light emitting section 13 is distributed to the object thus detected and identified.

Since the headlamp system 101 further includes the object identifying section 62, it is possible to control, in accordance with a kind of an object identified by the object identifying section 62, the luminous intensity of light to be distributed.

For example, when a kind of an object identified by the object identifying section 62 matches a kind of the object preregistered, the location shifting section 63 shifts the location of the light-distributed spot A1 such that light emitted from the light emitting section 13 is distributed to the identified object. This makes it possible that, only when an object detected by the object detecting section 61 is identified as a preregistered one, the luminous intensity of light to be distributed to the object is increased so as to illuminate the object with greater brightness.

Therefore, with the headlamp system 101, it is possible to optimally control, in accordance with a kind of an object, the luminous intensity of light to be distributed to the object.

Additionally, the headlamp system 101 in accordance with Embodiment 2 (i) further includes the ON/OFF switching section 64 that switches between on and off states of the light emitting section 13 and (ii) is arranged such that the ON/OFF switching section 64 turns on the light emitting section 13 when the location shifting section 63 shifts the location of the light-distributed spot A1 in relation to that of the light-distributed area a1.

Since the headlamp system 101 further includes the object detecting section 61 for detecting an object within the light-distributed area a1, the location shifting section 63 can shift the location of the light-distributed spot A1 such that light emitted from the light emitting section 13 is distributed toward the object detected by the object detecting section 61.

Therefore, with the headlamp system 101, it is possible to turn on the light emitting section 13 only as needed, and therefore to reduce power consumption of the headlamp system 101.

Furthermore, the headlamp system 101 in accordance with Embodiment 2 is arranged such that the reference values corresponding to traffic signs, pedestrians, and obstacles, are preregistered.

With the headlamp system 101, when an object detected by the object detecting section 61 is either a traffic sign, a pedestrian, or an obstacle, the location shifting section 63 shifts the location of the light-distributed spot A1 such that light emitted from the light emitting section 13 is distributed to the object. This makes it possible that, only when an object detected by the object detecting section 61 is either a traffic sign, a pedestrian, or an obstacle, (i) the luminous intensity of light distributed to the object is increased and therefore (ii) the object is illuminated with greater brightness.

Therefore, according to Embodiment 2, it is possible to provide a headlamp system 101 which (i) is capable of brightly illuminating traffic signs, pedestrians, and obstacles and therefore (ii) makes it possible, with eyes, to (a) accurately read traffic signs and (b) clearly recognize pedestrians and obstacles. This can realize a safe driving environment.

### [Modifications]

The following modifications 1 to 7 of the embodiment 2 are showing light shifting sections that could be used in an illumination device according to the invention. However, said modifications 1-7 are not according to the invention. The following description will discuss, with reference to Figs. 13 through 23, modifications of the laser light source unit 1A included in the headlamp system 101 in accordance with Embodiment 2.

In Embodiment 2, the laser light source unit la adjusts the angle of the reflector 14 so as to shift the location of the light-distributed spot A1. However, the present invention is not limited to such. For example, it is possible to shift the location of the light-distributed spot A1 by shifting an irradiated region of the light emitting section 13, which region is irradiated with a laser beam.

### (Modification 1)

Fig. 13 is a cross-sectional view illustrating a configuration of main components in the modification of the laser light source unit 1a in accordance with Embodiment 2. Fig. 14 is a close-up plan view illustrating an area around a light emitting section 13a illustrated in Fig. 13. As illustrated in Fig. 13, a laser light source unit 1B includes a mirror (location shifting section) 16, the light emitting section 13a, a heat sink 17 and a converging lens 18.

The mirror 16 reflects a laser beam toward the light emitting section 13a, and is an adjustable mirror whose angle can be adjusted. This allows an optical path of a laser beam, which is reflected toward the light emitting section 13a, to be adjusted within a range indicated by an arrow P in Fig. 13.

A heat sink 17 is for holding the light emitting section 13a and for dissipating, via its contact surface in contact with the light emitting section 13a, heat that is generated by irradiating the light emitting section 13a with a laser beam. Hence, the heat sink 17 is preferably made of a metal of high thermal conductivity such as aluminum or copper, any of which conducts heat well. However, a material for the heat sink 17 is not limited to any particular one, provided that the material is of high thermal conductivity.

A surface of the light emitting section 13a, which surface is in contact with the heat sink 17, is made reflective so as to function as a reflective surface. This allows a laser beam, which has entered through an irradiation surface of the light emitting section 13a, to be reflected by the reflective surface so as to be redirected into the light emitting section 13a.

The converging lens 18 is an optical system for distributing, within a predetermined angle, light which has been emitted from the light emitting section 13a. The converging lens 18 distributes the light to the light-distributed spot A1.

As described above, the laser light source unit 1B is arranged, without providing the reflector 14, such that the converging lens 18 is provided so as to face the light emitting section 13a provided on the heat sink 17.

Moreover, the laser light source unit 1B is arranged such that (i) the light emitting section 13a has a shape extending longer lengthways than widthways from a top view (see Fig. 14) and (ii) the irradiated region, which is irradiated with a laser beam, can be shifted (a) in a direction along longer sides of the irradiation surface and (b) by controlling an angle of the mirror 16.

By shifting the irradiated region, the location of a light emitting point of the light emitting section 13a in relation to the location of the converging lens 18 changes. This makes it possible to control the direction of light emitted from the light emitting section 13a.

Figs. 15(a) and 15(b) are cross-sectional views illustrating a direction in which light emitted from the laser light source unit 1B is distributed, Fig. 15(a) specifically illustrating a direction of the light distribution in a case where a central part of the irradiation surface is irradiated with a laser beam, and Fig. 15(b) specifically illustrating a direction of the light distribution in a case where the irradiated region is shifted.

According to the laser light source unit 1B, the light emitting section 13a and the converging lens 18 are located such that, when the central part of irradiation surface is irradiated with a laser beam, light emitted from the light emitting section 13a is distributed from the converging lens 18 in a straightforward direction (see Fig. 15(a)).

When the irradiated region is shifted from the central part, the location of the light emitting point in relation to that of the converging lens 18 changes, so that the light emitted from the light emitting section 13a is distributed from the converging lens 18 in directions deviating from the straightforward direction (see Fig. 15(b)).

As described above, with the laser light source unit 1B, it is possible to easily shift, by shifting the irradiated region of the light emitting section 13a, the location of the light-distributed spot A1. The location of the light-distributed spot A1 can be shifted without (i) employing the reflector 14 or (ii) rotating, with use of a motor etc., the entire body of the laser light source unit 1B. This can simplify the configuration of the laser light source unit 1B.

Note that the location of the light-distributed spot A1 can be shifted by shifting the irradiated region of the light emitting section 13a not only in the case where only the converging lens 18 alone is used, but also in a case where (i) the reflector 14A alone is used or (ii) the converging lens 18 and the reflector 14A are used in combination.

### (Modification 2)

The laser light source unit 1B includes the reflective-type light emitting section 13a that emits light from an irradiation surface irradiated with a laser beam. However, it is possible that the laser light source unit 1B includes, instead of the reflective-type light emitting section 13a, a transmissive-type light emitting section 13a that (i) transmits therethrough light which has entered through an irradiation surface irradiated with a laser beam and (ii) emits the light from a light exit surface provided opposite the irradiation surface.

Fig. 16 is a cross-sectional view illustrating a configuration of main components of a laser light source unit 1C including the transmissive-type light emitting section 13a. Fig. 17 is a close-up plan view illustrating an area around the light emitting section 13a illustrated in Fig. 16.

According to the laser light source unit 1C including the transmissive-type light emitting section 13a, the light emitting section 13a is provided on a transparent plate 19 such as a glass substrate, and the irradiation surface of the light emitting section 13a is irradiated with a laser beam via the transparent plate 19 (see Fig. 16). This allows (i) a laser beam, which has entered through the irradiation surface, to be transmitted through the light emitting section 13a and (ii) the light emitting section 13a to emit light (a) from the light exit surface opposite the irradiation surface and (b) to a converging lens 18.

With the laser light source unit 1C including such a transmissive-type light emitting section 13a, it is also possible to control, by shifting an irradiated region of the light emitting section 13, a distributing direction of light emitted from the light emitting section 13a (see Fig. 17).

### (Modification 3)

Additionally, in order to enhance the accuracy of distribution of light emitted from the light emitting section 13a, it is possible to use a converging lens 18 and an elliptical mirror in combination.

Fig. 18 is a cross-sectional view illustrating a configuration of main components of a laser light source unit 1D including the converging lens 18 and an elliptical mirror 21. As illustrated in Fig. 18, the laser light source unit 1D includes the converging lens 18 and the elliptical mirror 21, and the light emitting section 13a is provided such that the central part of the light emitting section 13a is located at a first focal point f1 of the elliptical mirror 21.

According to the laser light source unit 1D, light emitted from the light emitting section 13a provided at the first focal point f1 (i) is reflected by the elliptical mirror 21 toward a second focal point f2, (ii) passes through the second focal point f2, and (iii) is then transmitted through the converging lens 18 so as to be distributed within a predetermined angle range.

Thus, the laser light source unit 1D uses the converging lens 18 and the elliptical mirror 21 in combination. This allows light, which has been emitted from the light emitting section 13a, to be accurately distributed to the light-distributed spot A1.

### (Modification 4)

The laser light source unit can include, as the angle-adjustable mirror 16, an MEMS (Micro-Electro-Mechanical Systems) mirror (location shifting section) 30 whose angle can be changed along two different axes.

Fig. 19 is a perspective view illustrating a configuration of main components of a laser light source unit 1E including the MEMS mirror 30. The laser light source unit 1E illustrated in Fig. 19 shifts, by having the MEMS mirror 30 reflect a laser beam, an irradiated region of a light emitting section 13a, which irradiated region is irradiated with the laser beam.

Fig. 20 is a perspective view illustrating the MEMS mirror 30 illustrated in Fig. 19. As illustrated in Fig. 20, the MEMS mirror 30 is made up of a mirror section 30a, a movable ring 30b, and a holder 30c. The angle of the mirror section 30a is adjustable with the use of a two-axis (X axis, Y axis) gimbal mechanism. The MEMS mirror 30, for example, (i) is provided behind a reflector 14A and (ii) causes the light emitting section 13a to be irradiated with a laser beam via a window of the reflector 14A.

The mirror section 30a (i) is fixed on the movable ring 30b supported by the holder 30c, and (ii) has a circular shape whose diameter is, for example, 1 mm. A mirror surface of the mirror section 30a can be coated with a coat such as an Al-coat.

The holder 30c (i) is substantially a square having, for example, 5-mm sides, and (ii) supports the movable ring 30b on which the mirror section 30a is fixed. The mirror section 30a is arranged to change its angle in a D1 direction (an X-axis (vertical) direction defined as a direction of the force of gravity) and/or a D2 direction (a Y-axis (horizontal) direction perpendicular to the direction of the force of gravity), so as to redirect and reflect light to any desired direction. Thus, the irradiated region of the light emitting section 30a can be two dimensionally shifted by controlling the angle of the mirror section 30a.

As described above, with the laser light source unit IE, it is possible to shift the light-distributed spot A1 to a desired location by having the MEMS mirror 30 highly accurately shift, with high accuracy, the irradiated region of the light emitting section 13a.

Note that the MEMS mirror 30 is preferably arranged to change its angle more in the horizontal direction than in the vertical direction so as to correspond to the shape of the light-distributed area a1 produced by the LED light source unit 2a, which shape is stretched out more horizontally than it is vertically. With this configuration, the location of the light-distributed spot A1 can be shifted in the entire part of the light-distributed area a1.

Also, as illustrated by the laser light source unit 1E, the reflector 14A can have, on its side facing an opening 14a, a wavelength blocking coat 22 for blocking light having specific wavelengths. With the wavelength blocking coat 22, it is possible, for example, to block laser beams contained in light emitted from the light emitting section 13a, which laser beams have wavelengths of no more than 400 nm. With this configuration, light quite safe for the human eyes can be distributed out.

Note that wavelengths to be blocked by the wavelength blocking coat 22 can be adjusted as needed by changing a material for the wavelength blocking coat 22. It is also possible to use, instead of the wavelength blocking coat 22, a wavelength blocking filter.

### (Modification 5)

The laser light source unit can include, as the angle-adjustable mirror 16, a two-axis piezo mirror element (location shifting section) 31 using piezo elements.

Fig. 21 is a perspective view illustrating a configuration of main components of a laser light source unit 1F including the two-axis piezo mirror element 31. The laser light source unit 1F illustrated in Fig. 21 shifts, by having the two-axis piezo mirror element 31 reflect a laser beam, an irradiated region of the light emitting section 13a, which irradiated region is irradiated with the laser beam.

The two-axis piezo mirror element 31 (i) has a mechanism capable of changing, with the use of an actuator employing piezo elements, the angle of a micromirror supported by a two-axis (X axis, Y axis) gimbal mechanism and (ii) is capable of reflecting, at reflective surfaces of the piezo mirrors, light so as to redirect the optical path of the light.

The two-axis piezo mirror element 31 is capable of highly-precise angle adjustments, and is therefore suitable in a case where there are a plurality of returning laser beams (reflections of laser beams). Note that the two-axis piezo mirror element 31 has, for example, a cylindrical shape measuring 20 mm in diameter and 40 mm in height.

As described above, with the laser light source unit IF, it is possible to highly precisely shift, by controlling the two-axis piezo mirror element 31, the irradiated region of the light emitting section 13a. This allows the light-distributed spot A1 to be shifted to a desired location.

### (Modification 6)

The laser light source unit can include, as the angle-adjustable mirror 16, two galvano mirrors (location shifting section) 38a and 38b.

Fig. 22 is a perspective view illustrating a configuration of main components of a laser light source unit 1G including the two galvano mirrors 38a and 38b. The laser light source unit 1G illustrated in Fig. 22 shifts, by having the two galvano mirrors 38a and 38b reflect a laser beam, an irradiated region of the light emitting section 13a, which irradiated region is irradiated with the laser beam.

The laser light source unit 1G includes (i) the galvano mirror 38a that turns in a direction of an X axis, (ii) a galvano mirror driving section 39a for driving the galvano mirror 38a, and (iii) the galvano mirror 38b that turns in a direction of a Y axis, and (iv) a galvano mirror driving section 39b for driving the galvano mirror 38b.

The galvano mirror driving section 39a turns, by only an amount corresponding to the level of a driving voltage supplied, the galvano mirror 38a such that the irradiated region of the light emitting section 13a is shifted along the direction of the X axis. The galvano mirror 38a reflects a laser beam toward the galvano mirror 38b.

The galvano mirror driving section 39b turns, by only an amount corresponding to the level of a driving voltage supplied, the galvano mirror 38b such that the irradiated region of the light emitting section 13a is shifted along the direction of the Y axis. The galvano mirror 38a reflects a laser beam toward the light emitting section 13a.

By controlling the angles of the galvano mirror 38a and the galvano mirror 38b independently of each other, it is possible to shift, in the directions of both the X axis and the Y axis, the irradiated region of the light emitting section 13a.

As described above, the laser light source unit 1G controls the angles of the galvano mirror 38a and the galvano mirror 38b so as to highly precisely shift, in the directions of both the X axis and the Y axis, the irradiated region of the light emitting section 13a. This allows shifting the light-distributed spot A1 to a desired location.

Note that it is preferable that (i) the galvano mirrors 38a and 38b are coated with an HR-coat made up of a dielectric multilayer and (ii) the HR coat is adjusted to a wavelength of a laser beam used. By applying such an HR-coat to the galvano mirrors 38a and 38b, optical loss can be reduced.

### (Modification 7)

The laser light source unit can include, as the angle-adjustable mirror 16, a lens (location shifting section) 32a whose angle or position can be adjusted by an actuator 32b.

Fig. 23 is a perspective view illustrating a configuration of main components of a laser light source unit 1H including the adjustable lens 32a whose angle or position can be controlled. The laser light source unit 1H illustrated in Fig. 23 shifts, by having the angle-adjustable lens 32a reflect a laser beam, an irradiated region of the light emitting section 13a, which irradiated region is irradiated with the laser beam.

The lens 32a is an optical system for controlling an optical path of a laser beam transmitted through the lens 32a, and is, for example, a converging lens. The actuator 32b controls the operation of the lens 32a such that (i) the angle and the location of the lens 32a in relation to those of a laser beam are shifted and therefore (ii) the irradiated region of the light emitting section 13a is shifted.

The actuator 32b is for shifting the angle and the location of the lens 32a. Specifically, the actuator 32b generates an electromagnetic field by flowing an electric current through a coil, so as to generate a turning force (torque) to turn a magnet thereby to shift the angle and the location of the lens 32a. The actuator 32b is capable of reversing the direction of the turning force applied to the magnet by altering the direction of the electric current flowing through the coil.

Since the actuator 32b shifts the angle and the location of the lens 32a in relation to those of a laser beam, it is possible to control an optical path of a laser beam transmitted through the lens 32a. This allows the irradiated region of the light emitting section 13a to be shifted.

As described above, the laser light source unit 1H controls, with the use of the actuator 32b, the angle and the location of the lens 32a so as to shift the irradiated region of the light emitting section 13a. This allows shifting the light-distributed spot A1 to a desired location.

### [Embodiment 3]

Embodiment 3 of the illumination device in accordance with the present invention as defined in claim 2 will be described below with reference to Figs. 24 through 28. Note that, in Embodiment 3, members whose functions are the same as those of the foregoing Embodiments are given the same reference numerals/signs accordingly, and their description will be omitted.

### [Configuration of Headlamp System 102]

The following description will discuss, with reference to Figs. 24 through 26, a configuration of a headlamp system 102 in accordance with Embodiment 3.

Fig. 24 is a plan view schematically illustrating the configuration of the headlamp system 102, and Fig. 25 is a perspective view illustrating the headlamp system 102 illustrated in Fig. 24. As illustrated in Fig. 24 and Fig. 25, the headlamp system 102 includes a laser light source unit 1a, a laser light source unit 1b, and an LED light source unit 2a.

The laser light source unit 1a, the laser light source unit 1b, and the LED light source unit 2a are (i) arranged in line perpendicular to a direction in which the headlamp system 102 distributes light and (ii) provided on a metal base 3. The LED light source unit 2a is sandwiched between the laser light source units 1a and 1b.

According to the headlamp system 102, (i) light-distributed spots A1 and A2, to which light beams emitted from the laser light source units 1a and 1b are distributed respectively, are arranged in peripheral regions on both sides of a light-distributed area a1 to which light emitted from the LED light source unit 2a is distributed and (ii) a desired light distribution pattern A is produced by an operation to turn on the laser light source units 1a and 1b, which operation is conducted in accordance with a vehicle driver's steering.

Fig. 26 is a block diagram illustrating an internal configuration of a headlamp system 101 in accordance with Embodiment 3. As illustrated in Fig. 26, the headlamp system 102 includes a controlling section 6a in addition to the laser light source unit 1a, the laser light source unit 1b, and the LED light source unit 2a.

The following description will discuss each member included in the headlamp system 102. However, the laser light source unit 1a, the laser light source unit 1b, and the LED light source unit 2a are configured in Embodiment 3 in substantially the same way as in Embodiment 1, and the descriptions of their configurations are therefore omitted.

### (Controlling Section 6a)

The controlling section 6a controls, in accordance with a driver's steering, operations of the laser light source units 1a and 1b. The controlling section 6a includes a steering amount detecting section 65 and an ON/OFF switching section 64.

### (Steering Amount Detecting Section 65)

The steering amount detecting section 65 detects the amount of a driver's steering. Specifically, the steering amount detecting section 65 detects the amount of a driver's steering, and then evaluates whether the amount of the driver's steering is equal to or greater than a predetermined amount. In a case where the amount of the steering is greater than the predetermined amount, the steering amount detecting section 65 sends, to the ON/OFF switching section 64, a control signal indicative of a direction to which the driver steered.

### (ON/OFF Switching Section 64)

The ON/OFF switching section (switching section) 64 switches, based on a control signal sent from the steering amount detecting section 65, between on and off states of a light emitting section 13. Specifically, the ON/OFF switching section 64, when receiving the control signal, starts supplying electric power to a semiconductor laser element 11 of either the laser light source unit 1a or the laser light source unit 1b, depending on which light source unit is provided on a side (i.e. a direction indicated by the control signal) to which a driver steered a steering wheel. Then, the light emitting section 13 (i) is irradiated with a laser beam emitted from the semiconductor laser element 11 so as to be turned on and (ii) emits light to the direction in which a vehicle is running forward.

### [Operation of Headlamp 102]

The following description will discuss the operation of the headlamp system 102 with reference to Figs. 27 and 28. Fig. 22 is a flow chart illustrating the flow of the operation of the headlamp system 102, and Fig. 23 is a view schematically illustrating the headlamp system 102 in motion.

Fig. 27 is a flow chart illustrating the flow of the operation of the headlamp system 102, and Fig. 28 is a view schematically illustrating the headlamp system 102 in motion.

As illustrated in Fig. 27, when the LED light source unit 2a is turned on, the steering amount detecting section 65 starts to detect a driver's steering (S11).

Following S11, the steering amount detecting section 65, when detecting the driver's steering, evaluates whether the amount of the steering is equal to or greater than a predetermined amount (S12). In a case where the amount of the steering is equal to or greater than the predetermined amount (YES in S12), the steering amount detecting section 65 sends, to the ON/OFF switching section 64, a control signal indicative of a direction (side) to which the driver steered. Conversely, in a case where the amount of the steering is less than the predetermined amount (NO in S12), the steering amount detecting section 65 continues detection of the steering.

Following S12, the ON/OFF switching section 64, when the control signal is sent from the steering amount detecting section 65 (YES in S12), (i) starts supplying electric power to the semiconductor laser element 11 of either the laser light source unit 1a or 1b, depending on which laser light source unit is provided on the side (i.e. the direction indicated by the control signal) to which the driver steered the steering wheel and therefore (ii) causes the light emitting section 13 to be turned on (S13). In a case where a driver steers to a direction as indicated by an arrow shown in Fig. 28, the ON/OFF switching section 64 starts supplying electric power to the semiconductor laser element 11 of the laser light source unit 1b provided on the right side of the vehicle so that the light emitting section 13 of the laser light source unit 1b is turned on.

This (i) causes light of the light emitting section 13 to be distributed to a direction in which the vehicle runs forward and therefore (ii) allows an area in front of the vehicle to be brightly illuminated.

### [Summary of Embodiment 3]

The headlamp system 102 in accordance with Embodiment 3 includes (i) the steering amount detecting section 65 for detecting the amount of a driver's steering and (ii) the ON/OFF switching section 64 for switching, based on the amount of the steering detected by the steering amount detecting section 65, between on and off states of the light emitting section 13. Also, the headlamp system 102 is arranged such that (a) the light-distributed spots A1 and A2, to which light beams emitted from the light emitting sections 13 are distributed respectively (either of the light beams emitted at once), are arranged in peripheral regions on both sides of the light-distributed area a1 and (b) the ON/OFF switching section 64 causes the light emitting section 13, which is provided on the side identified by the steering amount detecting section 65 as a side (direction) to which a vehicle is turning, to be turned on.

That is, the headlamp system 102 is arranged such that (i) the light-distributed spots A1 and A2, to which light beams emitted from the light emitting sections 13 are distributed respectively (either of the light beams emitted at once), are arranged in peripheral regions on both sides of the light-distributed area a1 and (ii) the ON/OFF switching section 64, depending on the amount of steering detected by the steering amount detecting section 65, causes the light emitting section 13, which is provided on the side (direction) to which a vehicle is turning, to be turned on. This is how the light emitting section 13, which is provided on the side (direction) to which the vehicle runs forward, is turned on.

Therefore, according to Embodiment 3, it is possible to brightly illuminate an area in front of a vehicle. This achieves a headlamp system 102 that allows (i) an area in front of a vehicle to be brightly illuminated and (ii) reduction in power consumption to be achieved.

### [Embodiment 4]

Embodiment 4 in accordance with the present invention will be described below with reference to Figs. 29 through 32. Note that, in Embodiment 4, members whose functions are the same as those of the foregoing Embodiments are given the same reference numerals/signs accordingly, and their description will be omitted.

### [Configuration of Headlamp System 103]

A configuration of a headlamp system 103 in accordance with Embodiment 4 will be described below with reference to Figs. 29 and 30. The headlamp system 103 differs from the other headlamp systems described in the foregoing Embodiments in that light beams, which are emitted from a light emitting section 13 and an LED 23 respectively, are distributed, by use of a single reflector, to a light-distributed spot A1 or a light-distributed area a1 respectively.

Fig. 29 is a plan view schematically illustrating the configuration of the headlamp system 103 in accordance with Embodiment 4, and Fig. 30 is a cross-sectional view illustrating a configuration of main components of the headlamp system 103 illustrated in Fig. 29.

As illustrated in Figs. 29 and 30, the headlamp system 103 is arranged such that the light emitting section 13, the LED 23, and a reflector 14 are provided on a metal base 3.

The light emitting section 13 is provided at a focal point of the reflector 14, and the LED 23 is provided adjacently to the light emitting section 13. In Embodiment 4, the LED 23 is provided so as to be shifted (i) from the focal point of the reflector 14 by 2 mm and (ii) toward an opening 14a of the reflector 14.

Since the light emitting section 13 is thus provided at the focal point of the reflector 14, light emitted from the light emitting section 13 can be distributed to a light-distributed spot A1.

Additionally, since the LED 23 is provided at a position off the focal point of the reflector 14, it is possible to distribute light, which is emitted from the LED 23, to a light-distributed area a1 which differs from the light-distributed spot A1. Note that in Embodiment 4, the LED 23 has a shape extending longer lengthways than widthways from a top view, and is provided such that a direction along longer sides of the LED 23 is perpendicular to a direction of light distribution. This allows light emitted from the LED 23 to be distributed widely to a large area.

With the headlamp system 103 arranged such, it is possible to, for example, form, with the light-distributed area a1, a light distributing pattern (i) having a cut-off line cutting off a top edge part thereof and therefore (ii) fulfilling the standards of the light distribution characteristics of a passing beam headlamp. By combining such a light-distributed spot A1 with the light-distributed area a1, it is made possible to form a light distributing pattern fulfilling the standards of the light distribution characteristics of a driving beam headlamp.

### [Summary of Embodiment 4]

According to the headlamp system 103 in accordance with Embodiment 4 as described above, the light emitting section 13 is provided at the focal point of the reflector 14, and the LED 23 is provided at a position off the focal point of the reflector 14.

As described above, the light emitting section 13 is provided at the focal point of the reflector 14, and the LED 23 is provided at a position off the focal point of the reflector 14. Therefore, it is possible to distribute, with use of the single reflector 14, (i) light, which is emitted from the light emitting section 13, to the light-distributed spots A1 and (ii) light, which is emitted from the LED 23, to the light-distributed area a1.

Therefore, according to Embodiment 3, it is possible that light beams, which are emitted from the light emitting section 13 and the LED 23 respectively, are individually distributed with the use of the single reflector 14. This allows a downsized the headlamp system 103 to be achieved.

### [Modifications]

### (Modification 1)

In Embodiment 4, the light emitting section 13 and the LED 23 are provided adjacently to and independently of each other. However, the present invention is not limited to such. For instance, the light emitting section 13 and the LED 23 can be provided integrally.

Fig. 31 is a cross-sectional view schematically illustrating a configuration of an integrated LED 33 integrally made up of the light emitting section 13 and the LED 23. As illustrated in Fig. 31, the integrated LED 33 is configured by applying, to surfaces of the LED 23, a fluorescent material as the light emitting section 13.

The integrated LED 33 is, for example, arranged such that (i) part of the integrated LED 33 is provided at the focal point of the reflector 14 and (ii) an LED chip (not illustrated) of the LED 23 is provided at a position off the focal point. This allows (a) part of an irradiation surface of the integrated LED 33 to be irradiated with a laser beam so that the light emitting section 13 partly emits light and therefore (b) light beams, which are emitted from the light emitting section 13 and the LED 23 respectively, to be individually distributed with use of a single reflector 14.

Since the light emitting section 13 and the LED 23 are thus configured integrally, the number of parts required for the headlamp system 103 can be reduced. This allows the configuration of the headlamp system 103 to be simplified.

### (Modification 2)

With the headlamp system 103 in accordance with Embodiment 4 also, it is possible to control a distributing direction of light emitted from the light emitting section 13 by (i) preparing a light emitting section 13 having a shape extending longer lengthways than widthways and (ii) shifting, in a direction along longer sides of the light emitting section 13, an irradiated region on an irradiation surface of the light emitting section 13.

Fig. 32 is a plan view illustrating Modification 2 of the light emitting section 13 illustrated in Fig. 30. As illustrated in Fig. 32, a light emitting section 13a is prepared so as to have a shape extending longer lengthways than widthways. By adjusting an optical path of a laser beam within a range indicated by an arrow P, it is possible to shift an irradiated region in a direction along longer sides of the light emitting section 13a (see Fig. 32).

This makes it possible to change the location of a light emitting point of the light emitting section 13a in relation to the location of a reflector 14. Therefore, it is possible to control, by shifting the irradiated region of the light emitting section 13a, a direction in which light emitted from the light emitting section 13a is distributed.

### [Summary of Embodiments]

The illumination device in accordance with the present invention includes: a first light emitting section for emitting light upon reception of a laser beam; a second light emitting section for emitting light by use of a principle of light emission differing from one used by the first light emitting section; and at least one light distributing section for (i) distributing, to a first light-distributed region, the light emitted from the first light emitting section and (ii) distributing, to a second light-distributed region, the light emitted from the second light emitting section.

According to the configuration, the first light emitting section emits light upon reception of a laser beam; the second light emitting section emits light, according to a principle of light emission differing from that employed by the first light emitting section; and the light distributing section redirects light beams, which have been emitted from the first light emitting section and the second light emitting section respectively, to the first light-distributed region and the second light-distributed region, respectively.

The first light emitting section employs the principle of light emission by which the first light emitting section emits light upon reception of a laser beam. This allows (i) the first light emitting section to emit light having higher luminance than light produced by the conventional light sources and (ii) the first light emitting section itself to be downsized. Therefore, it is possible, with use of the light distributing section, to distribute light, which has been emitted from the first light emitting section, (a) to a small region located further and (b) without diffusing the light.

Besides such a first light emitting section of the illumination device, the illumination device also includes the second light emitting section that, in order to emit light, employs the principle of light emission differing from that employed by the first light emitting section. The light distributing section redirects light beams, which have been emitted from the first light emitting section and the second light emitting section respectively, to the first light-distributed region and the second light-distributed region, respectively.

Thus, with the configuration, it is possible to individually distribute light beams of the first light emitting section and the second light emitting section with the use of the light distributing section. Therefore, it is possible to arrange, as needed, the first light-distributed region and the second light-distributed region, independently of each other.

Therefore, with the configuration, it is possible to control the luminous intensity, such as (i) distributing light of the second light emitting section to a large area (the second light-distributed region) and (ii) distributing light of the first light emitting section to a region (the first light-distributed region) specifically intended to be illuminated more brightly than the other.

Thus, with the configuration, it is possible to individually distribute, with the use of the light distributing section, light beams that have been emitted from the first light emitting section and the second light emitting section respectively. This allows for efficient illumination taking advantage of the respective characteristics of the first light emitting section and the second light emitting section.

Hence, with the present invention, it is possible to achieve an illumination device using, in combination, respective characteristics of a laser light source and other light sources.

Furthermore, the illumination device in accordance with the present invention further includes a location shifting section for shifting a location of the first light-distributed region in relation to that of the second light-distributed region.

Since, with the configuration, the illumination device includes the location shifting section that shifts the location of the first light-distributed region in relation to that of the second light-distributed region, it is possible to control a distributing direction of light emitted from the first light emitting section.

Therefore, with the configuration, it is possible to carry out such control of a luminous intensity that, for example, light emitted from the first light emitting section is distributed to, of the second light-distributed region, a specific region intended to be illuminated more brightly than the rest.

Furthermore, it is preferable that the illumination device in accordance with the present invention further includes: a detecting section for detecting an object within the second light-distributed region, the location shifting section shifting the location of the first light-distributed region such that the light emitted from the first light emitting section is distributed to the object detected by the detecting section.

Since, with the configuration, the illumination device further includes the object detecting section, it is possible that the location shifting section shifts the location of the first light-distributed region such that light emitted from the first light emitting section is distributed to an object detected by the object detecting section.

Therefore, with the configuration, it is possible to carry out such control of a luminous intensity that the luminous intensity of light distributed to a detected object is increased so that the object is illuminated with greater brightness.

Furthermore, it is preferable that the illumination device in accordance with the present invention further includes an identifying section that identifies, by image recognition, a kind of the object detected by the detecting section, the location shifting section shifting, when the kind of the object detected by the detecting section is identified as a kind of an object registered in advance, the location of the first light-distributed region such that the light emitted from the first light emitting section is distributed to the object detected by the detecting section.

Since, with the configuration, the illumination device further includes the object identifying section, it is possible to control, in accordance with a kind of an object identified by the object identifying section, the luminous intensity of light to be distributed.

For example, when a kind of an object identified by the object identifying section matches a kind of the preregistered object, the location shifting section shifts the location of the first light-distributed region such that light emitted from the first light emitting section is distributed to the identified object. This makes it possible that, only when an object detected by the object detecting section is identified as a preregistered one, (i) the luminous intensity of light to be distributed to the object is increased and therefore (ii) the object is illuminated with greater brightness.

Therefore, with the configuration, it is possible to optimally control, in accordance with a kind of an object, the luminous intensity of light to be distributed to the object.

Furthermore, it is preferable that the illumination device in accordance with the present invention further includes a switching section for switching over the first light emitting section between on and off states, the switching section turning on the first light emitting section when the location of the first light-distributed region in relation to that of the second light-distributed region is shifted by the location shifting section.

With the configuration, the illumination device (i) further includes the switching section that switches between on and off states of the first light emitting section and (ii) is configured such that the switching section causes, when the location shifting section shifts the location of the first light-distributed region in relation to that of the second light-distributed region, the first light emitting section to be turned on.

Therefore, with the configuration, it is possible to turn on the first light emitting section only as needed, and therefore to reduce power consumption of the illumination device.

Furthermore, the illumination device in accordance with the present invention is preferably arranged such that the first light-distributed region is set so that the light emitted from the first light emitting section is distributed to a region including a central part of the second light-distributed region.

According to the configuration, the first light-distributed region is set so that the light emitted from the first light emitting section is distributed to a region including a central part of the second light-distributed region. Therefore, it is possible that light emitted from the first light emitting section is distributed to a central part of the second light-distributed region.

Therefore, with the configuration, it is possible to increase the luminous intensity of light distributed to the central part of the second light-distributed region so that the central part is illuminated with greater brightness.

Furthermore, the illumination device in accordance with the present invention is preferably arranged such that the first light-distributed region is set so that the light emitted from the first light emitting section is distributed to a region around the second light-distributed region.

According to the configuration, the first light-distributed region is set so that the light emitted from the first light emitting section is distributed to a region around the second light-distributed region. Therefore, it is possible that light emitted from the first light emitting section is distributed to a region around the second light-distributed region.

Therefore, with the configuration, it is possible to illuminate, with the use of the illumination device, a wider area.

Furthermore, the illumination device in accordance with the present invention as defined in claim 1 is arranged such that: the first light emitting section is provided at a focal point of the light distributing section; and the second light emitting section is provided off the focal point.

According to the configuration, the first light emitting section is provided at a focal point of the light distributing section, and the second light emitting section is provided off the focal point. Therefore, it is possible that, with the use of the respective light distributing sections, (i) light emitted from the first light emitting section is distributed further to the first light-distributed region and (ii) light emitted from the second light emitting section is distributed, over a wide range, to the second light-distributed region.

Therefore, with the configuration, it is possible that light beams, which are emitted from the first light emitting section and the second light emitting section respectively, are individually distributed with the use of a single light distributing section. This allows the illumination device to be downsized.

Furthermore, the illumination device in accordance with the present invention as defined in claim 2 is arranged such that the light distributing sections are provided for the first light emitting section and the second light emitting section, respectively.

According to the configuration, the light distributing sections are provided for the first light emitting section and the second light emitting section, respectively. Therefore, it is possible that light beams, which have been emitted from the first and second light emitting sections respectively, can be distributed, with use of the respective light distributing sections independent of each other, to the first and second light-distributed regions respectively.

That is, with the configuration, it is possible to individually distribute light beams emitted from the first and second light emitting sections respectively.

Furthermore, the illumination device in accordance with the present invention is arranged such that the first light emitting section contains a fluorescent material that emits light upon reception of a laser beam.

With the configuration, since the first light emitting section contains at least one kind of fluorescent materials that emit light upon reception of laser beams, it is possible that fluorescence emitted from each of the fluorescent materials is used as illuminating light. Also, since the first light emitting section contains varying kinds of fluorescent materials, it is possible to produce, by blending together fluorescent beams differing from one another in color, illuminating light with a desired chromaticity.

Therefore, with the configuration, a light source device can distribute, to the first light-distributed region, fluorescence with a desired color combination.

Furthermore, the illumination device in accordance with the present invention as defined in claim 2 is preferably arranged such that: the first light emitting section contains a fluorescent material that emits light upon reception of a laser beam; the second light emitting section is a light-emitting diode provided at a focal point of the light distributing section; and the fluorescent material is applied to surfaces of the light-emitting diode.

According to the configuration, the first light emitting section contains a fluorescent material that emits light upon reception of a laser beam; the second light emitting section is a light-emitting diode provided at a focal point of the light distributing section; and the fluorescent material is applied to surfaces of the light-emitting diode. Therefore, it is possible to integrally configure the first and second light emitting sections.

Therefore, with the configuration, it is possible to lower the number of parts required for the illumination device. This allows the configuration of the illumination device to be simplified.

Furthermore, a vehicle headlamp in accordance with the present invention includes the illumination device.

With the configuration, it is possible to achieve a vehicle headlamp using, in combination, characteristics of a laser light source and other light sources.

Furthermore, in order to solve the problem, a vehicle headlamp in accordance with the present invention includes the illumination device, and is arranged such that traffic signs, pedestrians, and obstacles are preregistered as the kinds of the objects used to identify the objects detected by the detecting section.

With the configuration, when an object detected by the object detecting section is either a traffic sign, a pedestrian, or an obstacle, the location shifting section shifts the location of the first light-distributed region such that light emitted from the first light emitting section is distributed to the object. This makes it possible that, only when an object detected by the object detecting section is either a traffic sign, a pedestrian, or an obstacle, (i) the luminous intensity of light distributed to the object is increased and therefore (ii) the object is illuminated with greater brightness.

Therefore, with the configuration, since traffic signs, pedestrians, and obstacles, are brightly illuminated, it is possible, with eyes, to (i) accurately read traffic signs and (ii) clearly recognize pedestrians and obstacles. This can realize a safe driving environment.

Furthermore, a vehicle headlamp in accordance with the present invention includes the illumination device, the first light-distributed region being preferably arranged to fulfill the standards of light distribution characteristics of a driving beam headlamp, and the second light-distributed region being arranged to fulfill the standards of light distribution characteristics of a passing beam headlamp.

According to the configuration, the first light-distributed region is arranged to fulfill the standards of light distribution characteristics of a driving beam headlamp, and the second light-distributed region is arranged to fulfill the standards of light distribution characteristics of a passing beam headlamp.

With the configuration, it is possible to achieve, without difficulty, a vehicle headlamp fulfilling the standards of light distribution characteristics of a vehicle headlamp.

Furthermore, a vehicle headlamp in accordance with the present invention includes the illumination device, the vehicle headlamp preferably further comprising: a steering amount detecting section that detects an amount of a driver's steering; and a switching section that switches, in accordance with the amount of the driver's steering detected by the steering amount detecting section, between on and off states of the first light emitting section, the first light-distributed region being set so that light emitted from the first light emitting section is distributed to either, one on a right side or one on a left side, of regions in the vicinity of the second light-distributed region, and the switching section causing the first light emitting section to be turned on such that light emitted from the first light emitting section is distributed toward a direction to which a vehicle is turning, which direction is identified by the steering amount detecting section.

According to the configuration, (i) the first light-distributed region is set such that light emitted from the first light emitting section is distributed to either, one on a right side or one on a left side, of regions in the vicinity of the second light-distributed region and (ii) the switching section causes, in accordance with the amount of a driver's steering detected by the steering amount detecting section, the first light emitting section to be turned on so that light emitted from first light emitting section is distributed to the direction in which the vehicle is running forward.

Therefore, with the configuration, it is possible to brightly illuminate an area in front of a vehicle. This allows (i) an area in front of a vehicle to be brightly illuminated and (ii) reduction of power consumption to be achieved.

The present invention is limited only by the scope of the claims. An embodiment derived from a proper combination of the claims is also encompassed in the technical scope of the present invention.

### Industrial Applicability

The present invention can be suitably used for various illumination devices, especially for vehicle headlamps.

### Reference Signs List

1a Laser light source unit
1b Laser light source unit
1A Laser light source unit
1B Laser light source unit
1C Laser light source unit
1D Laser light source unit
IF Laser light source unit
1G Laser light source unit
1H Laser light source unit
2a LED light source unit
2b LED light source unit
13 Light emitting section (first light emitting section)
13a Light emitting section (first light emitting section)
14 Reflector (light distributing section)
14A Reflector (light distributing section)
16 Mirror (location shifting section)
18 Converging lens (light distributing section)
21 Elliptical mirror (light distributing section)
23 LED (second light emitting section)
24 Reflector (light distributing section)
30 MEMS mirror (location shifting section)
31 Two-axis piezo mirror (location shifting section)
32a Lens (location shifting section)
33 Integrated LED (first light emitting section & second light emitting section)
38 Galvano mirror (location shifting section)
38a Galvano mirror (location shifting section)
38b Galvano mirror (location shifting section)
61 Object detecting section (detecting section)
62 Object identifying section (identifying section)
63 Location shifting section
64 ON/OFF switching section (switching section)
65 Steering amount detecting section
100 Headlamp system (illumination device/vehicle headlamp)
101 Headlamp system (illumination device/vehicle headlamp)
102 Headlamp system (illumination device/vehicle headlamp)
103 Headlamp system (illumination device/vehicle headlamp)
A1 Light-distributed spot (first light-distributed region)
A2 Light-distributed spot (first light-distributed region)
a1 Light-distributed area (second light-distributed region)
a2 Light-distributed area (second light-distributed region)
f1 Focal point
O Object (pedestrian)

## Claims

1. An illumination device comprising light emitting sections, the illumination device **characterized by** comprising:
a first light emitting section (13, 13a), as one of the light emitting sections, the first light emitting section (13 13a) containing a fluorescent material that emits light upon reception of a laser beam;
a second light emitting section (23), as another one of the light emitting sections, for emitting light by use of a principle of light emission differing from one used by the first light emitting section (13), wherein the second light emitting section (23) is a light-emitting diode (23); and
a light distributing section (14, 14A) for (i) distributing, to a first light-distributed region (A1, A2), the light emitted from the first light emitting section (13, 13a) and (ii) distributing, to a second light-distributed region (al, a2), the light emitted from the second light emitting section (23), the light distributing section (14, 14A) having a focal point (f1),
**characterized in that** the first light emitting section (13) is provided substantially at a focal point (f1) of the light distributing section (14, 14A), and the second light emitting section (23) is provided off the focal point (f1), and
**in that** the illumination device further comprises a location shifting section for shifting the position of the laser beam on the first light emitting section (13, 13a).

2. An illumination device comprising light emitting sections, the illumination device **characterized by** comprising:
a first light emitting section (13), as one of the light emitting sections, the first light emitting section (13) containing a fluorescent material that emits light upon reception of a laser beam;
a second light emitting section (23), as another one of the light emitting sections, for emitting light by use of a principle of light emission differing from one used by the first light emitting section (13), wherein the second light emitting section (23) is a light-emitting diode (23);
a first light distributing section (14) for distributing, to a first light-distributed region (A1, A2), the light emitted from the first light emitting section (13); and
a second light distributing section (24) for distributing, to a second light-distributed region (al, a2), the light emitted from the second light emitting section (23),
**characterized in that**
the first light distributing section (14) and the second light distributing section (24) are reflectors, wherein the first light distributing section (14) and the second light distributing section (24) as well as the first light emitting section (13) and the second light emitting section (23) are provided on a common base plate (3) having a high thermal conductivity, and wherein the illumination device further comprises a location shifting section for shifting a location of the first light-distributed region (A1, A2) in relation to that of the second light-distributed region (a1, a2) by shifting the position of the laser beam on the first light emitting section (13).

3. An illumination device as set forth in claim 1 or 2, further comprising:
a detecting section (61) for detecting an object (O) within the second light-distributed region (al, a2),
the location shifting section shifting the location of the first light-distributed region (A1, A2) such that the light emitted from the first light emitting section (13, 13a) is distributed to the object (O) detected by the detecting section (61).

4. An illumination device as set forth in claim 3, further comprising:
an identifying section (62) that identifies, by image recognition, a kind of the object (O) detected by the detecting section (61),
the location shifting section shifting, when the kind of the object (O) detected by the detecting section (61) is identified as a kind of an object (O) registered in advance, the location of the first light-distributed region (A1, A2) such that the light emitted from the first light emitting section (13, 13a) is distributed to the object (O) detected by the detecting section (61).

5. An illumination device as set forth in any one of claims 1 through 4, further comprising:
a switching section (64) for switching over the first light emitting section (13, 13A) between on and off states,
the switching section (64) turning on the first light emitting section (13, 13A) when the location of the first light-distributed region (A1, A2) in relation to that of the second light-distributed region (a1, a2) is shifted by the location shifting section.

6. The illumination device as set forth in claim 1 or 2, wherein the first light-distributed region (A1, A2) is set so that the light emitted from the first light emitting section (13, 13a) is distributed to a region including a central part of the second light-distributed region (a1, a2).

7. A vehicle headlamp (100 through 103) comprising an illumination device as set forth in any one of claims 1 through 6.

8. A vehicle headlamp (100 through 103) comprising an illumination device as set forth in claim 4, wherein
the kind of the object (O) registered in advance in order to be used to identify the object (O) detected by the detecting section includes a traffic sign, a pedestrian, or an obstacle.

9. A vehicle headlamp (100 through 103) comprising an illumination device as set forth in claim 6, wherein:
the first light-distributed region (A1, A2) is set to fulfill a standard of light distribution characteristics of a driving beam headlamp; and
the second light-distributed region (a1, a2) is set to fulfill a standard of light distribution characteristics of a passing beam headlamp.

10. A vehicle headlamp (100 through 103) comprising an illumination device as set forth in claim 1 or 2, further comprising:
a steering amount detecting section (65) for detecting an amount of a driver's steering; and
a switching section (64) for switching over the first light emitting section (13, 13a) between on and off states in accordance with the amount of the driver's steering detected by the steering amount detecting section (65),
the first light-distributed region (A1, A2) being set so that the light emitted from the first light emitting section (13, 13a) is distributed to either a right-side region or a left-side region beside the second light-distributed region (al, a2), and
the switching section (64) turning on the first light emitting section (13, 13a) such that the light emitted from the first light emitting section (13, 13a) is distributed toward a direction to which a vehicle provided with the vehicle headlamp 100 through 103) is turning, which direction is identified by the steering amount detecting section (65).

## Patentansprüche

1. Beleuchtungsvorrichtung, aufweisend lichtemittierende Teile, wobei die Beleuchtungsvorrichtung gekennzeichnet ist, indem sie aufweist:
einen ersten lichtemittierenden Teil (13, 13a) als einen der lichtemittierenden Teile, wobei der erste lichtemittierende Teil (13,13a) ein Fluoreszenzmaterial enthält, das bei Empfang eines Laserstahls Licht emittiert;
einen zweiten lichtemittierenden Teil (23) als einen anderen der lichtemittierenden Teile, um Licht unter Ausnutzung eines Prinzips einer Lichtemission zu emittieren, das sich von einem unterscheidet, das vom ersten lichtemittierenden Teil (13) genutzt wird, wobei der zweite lichtemittierende Teil (23) eine lichtemittierende Diode (23) ist; und
einen lichtverteilenden Teil (14, 14A), um (i) das vom ersten lichtemittierenden Teil (13, 13a) emittierte Licht auf ein erstes Lichtverteilungsgebiet (A1, A2) zu verteilen und (ii) das vom zweiten lichtemittierenden Teil (23) emittierte Licht auf ein zweites Lichtverteilungsgebiet (a1, a2) zu verteilen, wobei der lichtverteilende Teil (14, 14A) einen Brennpunkt (f1) aufweist,
**dadurch gekennzeichnet, dass**
der erste lichtemittierende Teil (13) im Wesentlichen bei einem Brennpunkt (f1) des lichtverteilenden Teils (14, 14A) vorgesehen ist und der zweite lichtemittierende Teil (23) außerhalb des Brennpunkts (f1) vorgesehen ist, und dadurch, dass die Beleuchtungsvorrichtung ferner einen eine Lage verschiebenden Teil aufweist, um die Position des Laserstrahls auf dem ersten lichtemittierenden Teil (13, 13a) zu verschieben.

2. Beleuchtungsvorrichtung, aufweisend lichtemittierende Teile, wobei die Beleuchtungsvorrichtung gekennzeichnet ist, indem sie aufweist:
einen ersten lichtemittierenden Teil (13) als einen der lichtemittierenden Teile, wobei der erste lichtemittierende Teil (13) ein Fluoreszenzmaterial enthält, das bei Empfang eines Laserstrahls Licht emittiert;
einen zweiten lichtemittierenden Teil (23) als einen anderen der lichtemittierenden Teile, um Licht unter Ausnutzung eines Prinzips einer Lichtemission zu emittieren, das sich von einem unterscheidet, das vom ersten lichtemittierenden Teil (13) genutzt wird, wobei der zweite lichtemittierende Teil (23) eine lichtemittierende Diode (23) ist;
einen ersten lichtverteilenden Teil (14), um das vom ersten lichtemittierenden Teil (13) emittierte Licht auf ein erstes Lichtverteilungsgebiet (A1, A2) zu verteilen; und
einen zweiten lichtverteilenden Teil (24), um das vom zweiten lichtemittierenden Teil (23) emittierte Licht auf ein zweites Lichtverteilungsgebiet (a1, a2) zu verteilen,
**dadurch gekennzeichnet, dass**
der erste lichtverteilende Teil (14) und der zweite lichtverteilende Teil (24) Reflektoren sind, wobei der erste lichtverteilende Teil (14) und der zweite lichtverteilende Teil (24) sowie der erste lichtemittierende Teil (13) und der zweite lichtemittierende Teil (23) auf einer gemeinsamen Basisplatte (3) mit einer hohen Wärmeleitfähigkeit vorgesehen sind, und
wobei die Beleuchtungsvorrichtung ferner einen eine Lage verschiebenden Teil aufweist, um eine Lage des ersten Lichtverteilungsgebiets (A1, A2) in Bezug auf diejenige des zweiten Lichtverteilungsgebiets (al, a2) zu verschieben, indem die Position des Laserstrahls auf dem ersten lichtemittierenden Teil (13) verschoben wird.

3. Beleuchtungsvorrichtung nach Anspruch 1 oder 2, ferner aufweisend:
einen detektierenden Teil (61), um ein Objekt (O) innerhalb des zweiten Lichtverteilungsgebiets (al, a2) zu detektieren,
wobei der eine Lage verschiebende Teil die Lage des ersten Lichtverteilungsgebiets (A1, A2) so verschiebt, dass das vom ersten lichtemittierenden Teil (13, 13a) emittierte Licht zum durch den detektierenden Teil (61) detektierten Objekt (O) verteilt wird.

4. Beleuchtungsvorrichtung nach Anspruch 3, ferner aufweisend:
einen identifizierenden Teil (62), der mittels Bilderkennung eine Art des durch den detektierenden Teil (61) detektierten Objekts (O) identifiziert,
wobei der eine Lage verschiebende Teil, wenn die Art des durch den detektierenden Teils (61) detektierten Objekts (O) als eine im Vorfeld registrierte Art eines Objekts (O) identifiziert wird, die Lage des ersten Lichtverteilungsgebiets (A1, A2) so verschoben wird, dass das vom ersten lichtemittierenden Teil (13, 13a) emittierte Licht zum durch den detektierenden Teil (61) detektierten Objekt (O) verteilt wird.

5. Beleuchtungsvorrichtung nach einem der Ansprüche 1 bis 4, ferner aufweisend:
einen Schaltteil (64), um den ersten lichtemittierenden Teil (13, 13A) zwischen Ein- und Aus-Zuständen umzuschalten,
wobei der Schaltteil (64) den ersten lichtemittierenden Teil (13, 13A) einschaltet, wenn die Lage des ersten Lichtverteilungsgebiets (A1, A2) in Bezug auf diejenige des zweiten Lichtverteilungsgebiets (al, a2) durch den eine Lage verschiebenden Teil verschoben wird.

6. Beleuchtungsvorrichtung nach Anspruch 1 oder 2, wobei das erste Lichtverteilungsgebiet (A1, A2) so eingestellt wird, dass das vom ersten lichtemittierenden Teil (13, 13A) emittierte Licht auf ein Gebiet verteilt wird, das einen zentralen Teil des zweiten Lichtverteilungsgebiets (a1, a2) enthält.

7. Fahrzeugscheinwerfer (100 bis 103), aufweisend eine Beleuchtungsvorrichtung nach einem der Ansprüche 1 bis 6.

8. Fahrzeugscheinwerfer (100 bis 103), aufweisend eine Beleuchtungsvorrichtung nach Anspruch 4, wobei
die Art des Objekts (O), die im Vorfeld registriert wurde, um zum Identifizieren des durch den detektierenden Teil detektierten Objekts (O) verwendet zu werden, ein Verkehrszeichen, einen Fußgänger oder ein Hindernis einschließt.

9. Fahrzeugscheinwerfer (100 bis 103), aufweisend eine Beleuchtungsvorrichtung nach Anspruch 6, wobei
das erste Lichtverteilungsgebiet (A1, A2) so eingestellt wird, dass ein Standard von Charakteristiken einer Lichtverteilung eines Fernlichtscheinwerfers erfüllt wird; und
das zweite Lichtverteilungsgebiet (a1, a2) so eingestellt wird, dass ein Standard von Charakteristiken einer Lichtverteilung eines Abblendscheinwerfers erfüllt wird.

10. Fahrzeugscheinwerfer (100 bis 103), aufweisend eine Beleuchtungsvorrichtung nach Anspruch 1 oder 2, ferner aufweisend:
einen einen Lenkbetrag detektierenden Teil (65), um einen Betrag eines Lenkeinschlags eines Fahrers zu detektieren; und
einen Schaltteil (64), um den ersten lichtemittierenden Teil (13, 13a) zwischen Ein- und Aus-Zuständen gemäß dem Betrag des Lenkeinschlags des Fahrers, der durch den einen Lenkbetrag detektierten Teil (65) detektiert wird, umzuschalten,
wobei das erste Lichtverteilungsgebiet (A1, A2) so eingestellt wird, dass das vom ersten lichtemittierenden Teil (13, 13a) emittierte Licht zu entweder einem Gebiet auf der rechten Seite oder einem Gebiet auf der linken Seite neben dem zweiten Lichtverteilungsgebiet (al, a2) verteilt wird, und
der Schaltteil (64) den ersten lichtemittierenden Teil (13, 13a) so einschaltet, dass das vom ersten lichtemittierenden Teil (13, 13a) emittierte Licht in eine Richtung, in die ein mit dem Fahrzeugscheinwerfer (100 bis 103) versehenes Fahrzeug abbiegt, verteilt wird, welche Richtung durch den einen Lenkbetrag detektierenden Teil (65) identifiziert wird.

## Revendications

1. Dispositif d'éclairage comprenant des sections émettrices de lumière, le dispositif d'éclairage étant **caractérisé en ce qu'**il comprend :
une première section émettrice de lumière (13, 13a), comme l'une des sections émettrices de lumière, la première section émettrice de lumière (13, 13a) contenant un matériau fluorescent qui émet de la lumière lors de la réception d'un faisceau laser ;
une deuxième section émettrice de lumière (23), comme l'autre des sections émettrices de lumière, pour émettre de la lumière à l'aide d'un principe d'émission de lumière différent d'un principe utilisé par la première section émettrice de lumière (13) dans lequel la deuxième section émettrice de lumière (23) est une diode électroluminescente (23) ; et
une section de distribution de lumière (14, 14A) pour (i) distribuer à une première zone à distribution de lumière (A1, A2) la lumière émise de la première section émettrice de lumière (13, 13a) et (ii) distribuer à une deuxième zone à distribution de lumière (al, a2) la lumière émise de la deuxième section émettrice de lumière (23), la section de distribution de lumière (14, 14A) ayant un point focal (f1),
**caractérisé en ce que** la première section émettrice de lumière (13) est prévue sensiblement à un point focal (f1) de la section de distribution de lumière (14, 14A), et la deuxième section émettrice de lumière (23) est prévue en dehors du point focal (f1), et
**en ce que** le dispositif d'éclairage comprend en outre une section de modification d'emplacement pour modifier la position du faisceau laser sur la première section émettrice de lumière (13, 13a).

2. Dispositif d'éclairage comprenant des sections émettrices de lumière, le dispositif d'éclairage étant **caractérisé en ce qu'**il comprend :
une première section émettrice de lumière (13), comme l'une des sections émettrices de lumière, la première section émettrice de lumière (13) contenant un matériau fluorescent qui émet de la lumière lors de la réception d'un faisceau laser ;
une deuxième section émettrice de lumière (23), comme l'autre des sections émettrices de lumière, pour émettre de la lumière à l'aide d'un principe d'émission de lumière différent d'un principe utilisé par la première section émettrice de lumière (13), dans lequel la deuxième section émettrice de lumière (23) est une diode électroluminescente (23) ;
une première section de distribution de lumière (14) pour distribuer à une première zone à distribution de lumière (A1, A2) la lumière émise de la première section émettrice de lumière (13) ; et
une deuxième section de distribution de lumière (24) pour distribuer à une deuxième zone à distribution de lumière (al, a2) la lumière émise de la deuxième section émettrice de lumière (23),
**caractérisé en ce que** la première section de distribution de lumière (14) et la deuxième section de distribution de lumière (24) sont des réflecteurs,
dans lequel la première section de distribution de lumière (14) et la deuxième section de distribution de lumière (24) ainsi que la première section émettrice de lumière (13) et la deuxième section émettrice de lumière (23) sont prévues sur une plaque de base commune (3) ayant une conductivité thermique élevée, et
dans lequel le dispositif d'éclairage comprend en outre une section de modification d'emplacement pour modifier un emplacement de la première zone à distribution de lumière (A1, A2) par rapport à celle de la deuxième zone à distribution de lumière (a1, a2) en modifiant la position du faisceau laser sur la première section émettrice de lumière (13).

3. Dispositif d'éclairage comme présenté dans la revendication 1 ou 2, comprenant en outre :
une section de détection (61) pour détecter un objet (O) à l'intérieur de la deuxième zone à distribution de lumière (a1, a2),
la section de modification d'emplacement modifiant l'emplacement de la première zone à distribution de lumière (A1, A2) de telle sorte que la lumière émise de la première section émettrice de lumière (13, 13a) soit distribuée à l'objet (O) détecté par la section de détection (61).

4. Dispositif d'éclairage comme présenté dans la revendication 3, comprenant en outre :
une section d'identification (62) qui identifie, par reconnaissance d'image, un type de l'objet (O) détecté par la section de détection (61),
la section de modification d'emplacement modifiant, quand le type de l'objet (O) détecté par la section de détection (61) est identifié comme un type d'un objet (O) enregistré à l'avance, l'emplacement de la première zone à distribution de lumière (A1, A2) de telle sorte que la lumière émise de la première section émettrice de lumière (13, 13a) soit distribuée à l'objet (O) détecté par la section de détection (61).

5. Dispositif d'éclairage comme présenté dans l'une quelconque des revendications 1 à 4, comprenant en outre :
une section de commutation (64) pour commuter par la première section émettrice de lumière (13, 13A) entre des états marche et arrêt,
la section de commutation (64) mettant en marche la première section émettrice de lumière (13, 13A) quand l'emplacement de la première zone à distribution de lumière (A1, A2) par rapport à celui de la deuxième zone à distribution de lumière (a1, a2) est modifié par la section de modification d'emplacement.

6. Dispositif d'éclairage comme présenté dans la revendication 1 ou 2, dans lequel la première zone à distribution de lumière (A1, A2) est fixée de telle sorte que la lumière émise de la première section émettrice de lumière (13, 13a) soit distribuée à une zone incluant une partie centrale de la deuxième zone à distribution de lumière (a1, a2).

7. Phare de véhicule (100 à 103) comprenant un dispositif d'éclairage comme présenté dans l'une quelconque des revendications 1 à 6.

8. Phare de véhicule (100 à 103) comprenant un dispositif d'éclairage comme présenté dans la revendication 4, dans lequel
le type de l'objet (O) enregistré à l'avance afin d'être utilisé pour identifier l'objet (O) détecté par la section de détection inclut un panneau de signalisation, un piéton ou un obstacle.

9. Phare de véhicule (100 à 103) comprenant un dispositif d'éclairage comme présenté dans la revendication 6, dans lequel :
la première zone à distribution de lumière (A1, A2) est fixée pour répondre à une norme de caractéristiques de distribution de lumière d'un phare à faisceau de route ; et
la deuxième zone à distribution de lumière (a1, a2) est fixée pour répondre à une norme de caractéristiques de distribution de lumière d'un phare à faisceau de croisement.

10. Phare de véhicule (100 à 103) comprenant un dispositif d'éclairage comme présenté dans la revendication 1 ou 2, comprenant en outre :
une section de détection de degré de braquage (65) pour détecter un degré d'un braquage de conducteur ; et
une section de commutation (64) pour commuter par la première section émettrice de lumière (13, 13a) entre des états marche et arrêt selon le degré du braquage de conducteur détecté par la section de détection de degré de braquage (65),
la première zone à distribution de lumière (A1, A2) étant fixée de telle sorte que la lumière émise de la première section émettrice de lumière (13, 13a) soit distribuée soit sur une zone droite, soit sur une zone gauche à côté de la deuxième zone à distribution de lumière (a1, a2), et
la section de commutation (64) mettant en marche la première section émettrice de lumière (13, 13a) de telle sorte que la lumière émise depuis la première section émettrice de lumière (13, 13a) soit distribuée vers une direction dans laquelle un véhicule pourvu du phare de véhicule (100 à 103) est en train de tourner, laquelle direction est identifiée par la section de détection de degré de braquage (65).
